(19) Europäisches Patentamt
European Patent Office
Office européen des brevets

(11) **EP 4 563 627 A1**

(12) # EUROPEAN PATENT APPLICATION
published in accordance with Art. 153(4) EPC

(43) Date of publication:
**04.06.2025 Bulletin 2025/23**

(21) Application number: **23845870.7**

(22) Date of filing: **30.01.2023**

(51) International Patent Classification (IPC):
**C08J 5/18** (2006.01)    **B29B 17/00** (2006.01)
**B32B 27/36** (2006.01)    **B65D 65/40** (2006.01)

(52) Cooperative Patent Classification (CPC):
**B29B 17/00; B32B 9/00; B32B 27/36; B65D 65/40;
C08J 5/18;** Y02W 30/80

(86) International application number:
**PCT/JP2023/002858**

(87) International publication number:
**WO 2024/024130 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  29.07.2022  JP 2022121475
        29.07.2022  JP 2022121355
        29.07.2022  JP 2022121476
        29.07.2022  JP 2022121325
        29.07.2022  JP 2022121327
        29.07.2022  JP 2022121356
        29.07.2022  JP 2022121390
        29.07.2022  JP 2022121402

(71) Applicant: **Toyobo Co., Ltd.**
**Kita-ku**
**Osaka-shi, Osaka 530-0001 (JP)**

(72) Inventors:
• **GOTO,Takamichi**
**Inuyama-shi, Aichi 484-8508 (JP)**
• **MANABE, Nobuyuki**
**Inuyama-shi, Aichi 484-8508 (JP)**

(74) Representative: **Vossius & Partner**
**Patentanwälte Rechtsanwälte mbB**
**Siebertstrasse 3**
**81675 München (DE)**

(54)  **BIAXIALLY-ORIENTED POLYESTER FILM, LAMINATE, AND PACKAGING CONTAINER**

(57)  A biaxially oriented polyester film contains chemically recycled polyester. In the biaxially oriented polyester film, the area proportion of a region having a molecular weight of 1000 or less is 1.9% or more and 5.5% or less of the total peak area in the molecular weight distribution curve acquired by gel permeation chromatography.

Fig.1

**EP 4 563 627 A1**

**Description**

TECHNICAL FIELD

The present invention relates to a biaxially oriented polyester film, a laminated body, and a packaging container.

BACKGROUND ART

Polyester, such as polyethylene terephthalate (PET) and polybutylene terephthalate (PBT), that is thermoplastic resin excellent in heat resistance and mechanical properties is utilized in extremely diverse fields including plastic films, electronics, energy, packaging materials, and motor vehicles. Among these, biaxially oriented polyester films are excellent in balance between the cost and the mechanically characteristic strength (that is, mechanical properties), heat resistance, dimensional stability, chemical resistance, optical properties and the like, and are thus widely utilized in industrial and packaging fields.

In recent years, with the growing demand for the construction of a sound material-cycle society, the utilization of recycled raw materials has been promoted in the material field as well. With regard to polyester as well, recycling of used PET bottles is taking place. It is said that use of recycled polyester leads to the reduction in $CO_2$ emissions. In view of such circumstances, it is desirable to increase the proportion of recycled polyester used even slightly.

For example, Patent Document 1 discloses a biaxially oriented polyester film produced using polyester obtained by mechanically recycling PET bottles, that is, mechanically recycled polyester.

However, since the degrees of contamination of used polyester products such as used PET bottles varies depending on the contents that have been filled in these, the storage environment and the like, it is difficult to remove contaminants to a high degree in mechanical recycling.

In addition to this, since mechanically recycled polyester contains a relatively large amount of low molecular weight components, products produced using mechanically recycled polyester often exhibit a yellowish tinge.

Meanwhile, as polyester recycled by a method different from mechanical recycling, polyester obtained by decomposing polyester contained in used polyester products down to the monomer level and then performing polymerization again, that is, chemically recycled polyester is known (see Patent Documents 3 and 4).

For example, Patent Document 2 discloses a printed resin film including a polyester film produced using chemically recycled polyester and a printed layer.

PRIOR ART DOCUMENTS

PATENT DOCUMENTS

Patent Document 1: JP-B-6036099

Patent Document 2: JP-B-6984717

Patent Document 3: JP-A-2000-169623

Patent Document 4: JP-A-2000-302707

SUMMARY OF THE INVENTION

PROBLEMS TO BE SOLVED BY THE INVENTION

Since chemically recycled polyester is often polymerized to have a high molecular weight by solid state polymerization so as to be easily formed into PET bottles and further low molecular weight components are reduced in this course, the intrinsic viscosity of chemically recycled polyester is often higher than the intrinsic viscosity of general polyester for biaxially oriented polyester films.

In the course of investigation to use chemically recycled polyester for the production of biaxially oriented polyester films but not PET bottles, the present inventors have found out that films produced using chemically recycled polyester are likely to break during stretching, and therefore, the film formation speed may have to be excessively slowed down.

In response to this, the present inventors have discovered the amount of low molecular weight components in which breaking of the film that may occur during stretching can be suppressed or reduced and the yellowish tinge that the biaxially oriented polyester film may exhibit can also be reduced, and thus completed the present invention.

An object of the present invention is to provide a biaxially oriented polyester film that is capable of decreasing the environmental burden and reducing the yellowish tinge as well as suppressing or reducing breaking of the film that may occur during stretching. Another object of the present invention is to provide a laminated body including the biaxially oriented polyester film, and a packaging container including the laminated body.

MEANS FOR SOLVING THE PROBLEMS

In order to solve this problem, the present invention has the configuration of [1] below.

[1] A biaxially oriented polyester film containing chemically recycled polyester,

in which an area proportion of a region having a molecular weight of 1000 or less is 1.9% or more and 5.5% or less of a total peak area in a molecular weight distribution curve acquired by gel permeation chromatography. Here, "chemically recycled polyester" refers to polyester obtained by decomposing polyester contained in used polyester products down to the monomer level and then performing polymerization again.

In [1], the biaxially oriented polyester film contains chemically recycled polyester. Here, "the biaxially oriented polyester film contains chemically recycled polyester" means that at least one of a plurality of layers contains chemically recycled polyester in a case where the biaxially oriented polyester film includes the plurality of layers.

According to [1], since the biaxially oriented polyester film contains chemically recycled polyester, the environmental burden can be decreased.

Moreover, as the area proportion of the region having a molecular weight of 1000 or less is 5.5% or less, that is, the upper limit of the content of components having a molecular weight of 1,000 or less (hereinafter sometimes referred to as "low molecular weight components") is set, it is possible to reduce the yellowish tinge that the biaxially oriented polyester film may exhibit.

In addition, as the area proportion of the region having a molecular weight of 1000 or less is 1.9% or more, that is, the lower limit of the content of low molecular weight components is set, it is possible to secure the content of low molecular weight components that can act like a plasticizer.

Furthermore, as the area proportion of the region having a molecular weight of 1000 or less is 1.9% or more, it is possible to limit the molecular weight of the polyester contained in the biaxially oriented polyester film to a certain degree or less. This will be described. Since low molecular weight components are incorporated into the polyester in the course of polymerization, there is a tendency that the amount of low molecular weight components is smaller as the molecular weight of the polyester is higher and the amount of low molecular weight components is larger as the molecular weight of the polyester is lower. According to [1], since the area proportion of the region having a molecular weight of 1000 or less is 1.9% or more, that is, low molecular weight components are present in a certain amount or more, it is possible to limit the molecular weight of the polyester contained in the biaxially oriented polyester film to a certain degree or less.

Therefore, the stress (namely, stretching stress) during stretching in the course of production of the biaxially oriented polyester film can be prevented from becoming excessively large, and as a result, breaking of the film that may occur during stretching can be suppressed or reduced.

It is preferable that the present invention further has the configuration of [2] and subsequent items below.

[2] The biaxially oriented polyester film according to [1], in which a color b* value per 1 $\mu$m of thickness is 0.067 or less.

According to [2], the yellowish tinge that the biaxially oriented polyester film may exhibit can be limited. Therefore, the influence of the color tone of the biaxially oriented polyester film on the appearance (namely, external appearance) of the printed layer can be reduced, for example, in a case where a printed layer is formed on the biaxially oriented polyester film. The influence of the color tone of the biaxially oriented polyester film on the appearance of the contents can be reduced, for example, in a case where a packaging container is produced using the biaxially oriented polyester film.

[3] The biaxially oriented polyester film according to [1] or [2], in which a content of the chemically recycled polyester is 20% by mass or more.

According to [3], the environmental burden can be further decreased.

[4] A laminated body including:

the biaxially oriented polyester film according to any one of [1] to [3]; and
a sealant layer.

According to [4], since the laminated body includes a sealant layer, a product including the laminated body (for example, a packaging container) can be produced by heat sealing.

[5] The laminated body according to [4], further including a printed layer,
in which the printed layer, the biaxially oriented polyester film, and the sealant layer are arranged in this order in a thickness direction of the laminated body at least at a part of the laminated body.

Here, "the printed layer, the biaxially oriented polyester film, and the sealant layer are arranged in this order in the thickness direction of the laminated body" is the expression that allows the presence of other layers between the printed layer and the biaxially oriented polyester film and between the biaxially oriented polyester film and the sealant layer.

According to [5], since the laminated body includes a printed layer, it is possible to impart designs (for example, letters, patterns, and symbols) to the laminated body and products including the laminated body (for example, packaging containers).

[6] The laminated body according to [4], further including a printed layer,
in which the biaxially oriented polyester film, the printed layer, and the sealant layer are arranged in this order in a thickness direction of the laminated body at least at a part of the laminated body.

Here, "the biaxially oriented polyester film, the printed layer, and the sealant layer are arranged in this order in the thickness direction of the laminated body" is the expression that allows the presence of other layers between the biaxially oriented polyester film and the printed layer and between the printed layer and the sealant layer.

According to [6], since the laminated body includes a printed layer, it is possible to impart designs (for example, letters, patterns, and symbols) to the laminated body and products including the laminated body (for example, packaging containers).

[7] A laminated body including:

the biaxially oriented polyester film according to any one of [1] to [3]; and
a pressure sensitive adhesive layer.

According to [7], since the laminated body includes a pressure sensitive adhesive layer, a product including the laminated body (for example, a packaging container) can be produced by pressure application.

[8] The laminated body according to [7], further including a printed layer,
in which the printed layer, the biaxially oriented polyester film, and the pressure sensitive adhesive layer are arranged in this order in a thickness direction of the laminated body at least at a part of the laminated body.

Here, "the printed layer, the biaxially oriented polyester film, and the pressure sensitive adhesive layer are arranged in this order in the thickness direction of the laminated body" is the expression that allows the presence of other layers between the printed layer and the biaxially oriented polyester film and between the biaxially oriented polyester film and the pressure sensitive adhesive layer.

According to [8], since the laminated body includes a printed layer, it is possible to impart designs (for example, letters, patterns, and symbols) to the laminated body and products including the laminated body (for example, packaging containers).

[9] The laminated body according to [7], further including a printed layer,
in which the biaxially oriented polyester film, the printed layer, and the pressure sensitive adhesive layer are arranged in this order in a thickness direction of the laminated body at least at a part of the laminated body.

Here, "the biaxially oriented polyester film, the printed layer, and the pressure sensitive adhesive layer are arranged in this order in the thickness direction of the laminated body" is the expression that allows the presence of other layers between the biaxially oriented polyester film and the printed layer and between the printed layer and the pressure sensitive adhesive layer.

According to [9], since the laminated body includes a printed layer, it is possible to impart designs (for example, letters, patterns, and symbols) to the laminated body and products including the laminated body (for example, packaging containers).

[10] A laminated body including:

the biaxially oriented polyester film according to any one of [1] to [3]; and
at least one support layer selected from the group consisting of polyethylene terephthalate, stretched nylon, and a polyethylene film.

[11] A laminated body including:

the biaxially oriented polyester film according to any one of [1] to [3]; and
a base layer.

[12] A laminated body including:

the biaxially oriented polyester film according to any one of [1] to [3];
an adhesive agent layer and/or an anchor coat layer; and
a sealant layer.

[13] A packaging container including the laminated body according to any one of [4] to [12].

[14] The biaxially oriented polyester film according to any one of [1] to [3], the laminated body according to any one of [4] to [12], and/or the packaging container according to [13], in which the area proportion of the region having a molecular weight of 1000 or less is 1.9% or more and 5.0% or less of the total peak area in the molecular weight distribution curve of the biaxially oriented polyester film acquired by gel permeation chromatography.

[15] The biaxially oriented polyester film according to any one of [1] to [3], the laminated body according to any one of [4] to [12], and/or the packaging container according to [13], in which the area proportion of the region having a molecular weight of 1000 or less is 1.9% or more and 4.8% or less of the total peak area in the molecular weight distribution curve of the biaxially oriented polyester film acquired by gel permeation chromatography.

[16] The biaxially oriented polyester film according to any one of [1] to [3], the laminated body according to any one of [4] to [12], and/or the packaging container according to [13], in which the area proportion of the region having a molecular weight of 1000 or less is 1.9% or more and 4.6% or less of the total peak area in the molecular weight distribution curve of the biaxially oriented polyester film acquired by gel permeation chromatography.

[17] The biaxially oriented polyester film according to any one of [1] to [3], the laminated body according to any one of [4] to [12], and/or the packaging container according to [13], in which the area proportion of the region having a molecular weight of 1000 or less is 1.9% or more and 4.5% or less of the total peak area in the molecular weight distribution curve of the biaxially oriented polyester film acquired by gel permeation chromatography.

[18] The laminated body and/or packaging container according to any one of [11] to [17] and/or the packaging container, in which the base layer contains at least one selected from the group consisting of paper, polyethylene terephthalate, stretched nylon, and stretched polypropylene.

EFFECT OF THE INVENTION

According to the present invention, it is possible to provide a biaxially oriented polyester film that is capable of decreasing the environmental burden and reducing the yellowish tinge as well as suppressing or reducing breaking of the film that may occur during stretching.

BRIEF DESCRIPTION OF THE DRAWINGS

Fig. 1 is a schematic cross-sectional view of a biaxially oriented polyester film according to the present embodiment.

Fig. 2 is a schematic cross-sectional view of a laminated body according to an embodiment.

Fig. 3 is a schematic cross-sectional view of a laminated body according to an embodiment.

Fig. 4A is a schematic cross-sectional view of a laminated body according to an embodiment.

Fig. 4B is a schematic cross-sectional view of a laminated body according to an embodiment.

Fig. 5A is a schematic cross-sectional view of a laminated body according to an embodiment.

Fig. 5B is a schematic cross-sectional view of a laminated body according to an embodiment.

Fig. 6A is a schematic cross-sectional view of a laminated body according to an embodiment.

Fig. 6B is a schematic cross-sectional view of a laminated body according to an embodiment.

Fig. 7 is a schematic cross-sectional view of a laminated body according to an embodiment.

Fig. 8 is a schematic cross-sectional view of a laminated body according to an embodiment.

Fig. 9 is a schematic cross-sectional view of a laminated body according to an embodiment.

Fig. 10 is a schematic cross-sectional view of a laminated body according to an embodiment.

Fig. 11 is a schematic cross-sectional view of a laminated body according to an embodiment.

Fig. 12 is a schematic cross-sectional view of a laminated body according to an embodiment.

Fig. 13 is a schematic cross-sectional view of a laminated body according to an embodiment.

Fig. 14 is a schematic cross-sectional view of a laminated body according to an embodiment.

Fig. 15A is a schematic cross-sectional view of a laminated body according to an embodiment.

Fig. 15B is a schematic cross-sectional view of a laminated body according to an embodiment.

Fig. 16 is a schematic cross-sectional view of a laminated body according to an embodiment.

Fig. 17A is a schematic cross-sectional view of a laminated body according to an embodiment.

Fig. 17B is a schematic cross-sectional view of a laminated body according to an embodiment.

MODE FOR CARRYING OUT THE INVENTION

<1. Introduction>

Hereinafter, embodiments of the present invention will be described.
In the following, polyethylene terephthalate is sometimes referred to as PET or PET. In other words, these are used as synonyms.
The machine direction (hereinafter referred to as "MD") is sometimes referred to as the longitudinal direction. In other words, MD and the longitudinal direction are used as synonyms.
The transverse direction (hereinafter referred to as "TD") is sometimes referred to as the width direction. In other words, TD and the width direction are used as synonyms.
In describing embodiments of the present invention, it is sometimes expressed as "the first layer 81, the second layer 82, and the third layer 83 are arranged in this order in the thickness direction of the biaxially oriented polyester film 8". This expression allows the presence of other layers between the first layer 81 and the second layer 82 and between the second layer 82 and the third layer 83. The same applies to other expressions including the description that a plurality of layers are "arranged in this order" (that is, similar expressions).

<2. Biaxially oriented polyester film>

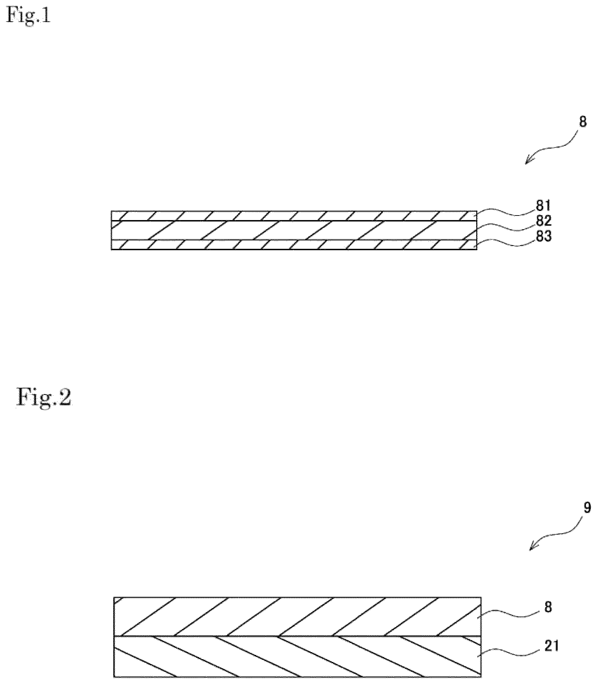

As illustrated in Fig. 1, a biaxially oriented polyester film 8 of the present embodiment is in the form of a film.
The biaxially oriented polyester film 8 contains chemically recycled polyester. For this reason, the environmental burden can be decreased.
The chemically recycled polyester is polyester obtained by decomposing polyester contained in used polyester products down to the monomer level and then performing polymerization again. Since chemically recycled polyester is produced using polyester contained in used polyester products as a raw material, the environmental burden can be decreased. Moreover, chemically recycled polyester is superior to mechanically recycled polyester in terms of hygiene since foreign materials (for example, catalysts, coloring components, different kinds of plastic, metal) are removed in the course of recycling.
Examples of the polyester that is decomposed to the monomer level include used polyester products. The used polyester products may be, for example, in the form of bales, flakes, or pellets. The used polyester products are preferably used PET bottles.
Examples of the method for decomposing polyester to the monomer level include a method in which PET bottle bales are crushed and washed, then at least ethylene glycol (EG) and a catalyst are added to this (that is, flakes), heating is performed, and decomposition to bis-2-hydroxyethyl terephthalate (BHET) is performed (hereinafter sometimes referred to as the "BHET method") (see Patent Document 3, that is, JP-A-2000-169623). Other examples of the method for decomposing polyester to the monomer level include the method described in Patent Document 4 (JP-A-2000-302707). Of course, polyester may be decomposed to the monomer level by methods other than those exemplified here.
Regarding the BHET method, an example of the procedure for decomposing polyethylene terephthalate, which constitutes used PET bottles, to obtain BHET will be described here.

The PET bottle bales are put into a crusher and wet crushed. In wet crushing, the PET bottle bales can be crushed in washing water (for example, tap water or groundwater to which a detergent is added if necessary). The washing water may be at room temperature or may be warmed.

The washing water together with the flakes of PET bottles are discharged from the crusher and subjected to gravity separation to remove foreign materials (for example, metal, stones, glass, and sand).

Next, the flakes are rinsed with ion-exchanged water and, if necessary, centrifuged for dewatering.

The flakes are melted, then a catalyst and excess ethylene glycol are added, and heating is performed (that is, depolymerization is performed). By this, polyethylene terephthalate constituting the flakes can be depolymerized, and as a result, a depolymerized liquid in which BHET is dissolved in ethylene glycol can be obtained. The flakes are preferably melted in a state of containing moisture (for example, in a state of containing moisture after centrifugal dewatering).

Foreign materials (for example, different kinds of plastic, metal, and glass) floating or settling in the depolymerization liquid are removed. Since the melting point of cyclic oligomers in the depolymerization liquid is higher than that of polyethylene terephthalate, low molecular weight components such as cyclic oligomers can also be removed by filtration.

The depolymerized liquid is allowed to pass (that is, flow) through activated carbon and then through an ion exchange resin. By allowing the depolymerized liquid to pass through activated carbon, coloring components (for example, pigments, dyes, and compounds generated by thermal degradation of organic substances) can be removed. By allowing the depolymerized liquid to pass through an ion exchange resin, catalysts (for example, polymerization catalyst and depolymerization catalyst) and metal ions can be removed.

Next, the depolymerized liquid is cooled to precipitate BHET, and then the BHET and ethylene glycol are subjected to solid-liquid separation.

In order to remove residual ethylene glycol from BHET (that is, to concentrate BHET), vacuum evaporation is performed.

The concentrated BHET is subjected to molecular distillation.

By this procedure, highly pure BHET can be obtained. Here, an operation is explained in which BHET and ethylene glycol are subjected to solid-liquid separation and then vacuum evaporation is performed, but ethylene glycol may be distilled off from the depolymerized liquid instead of this operation.

Examples of the chemically recycled polyester include chemically recycled polyethylene terephthalate (hereinafter sometimes referred to as "chemically recycled PET"), chemically recycled polybutylene terephthalate, and chemically recycled polyethylene-2,6-naphthalate. Of course, these may contain a copolymerization component. Chemically recycled PET is preferable for the reason that the chemically recycled PET is easily available and is excellent in mechanical properties and heat resistance. These may be used singly or two or more kinds thereof may be used.

The chemically recycled polyester may be copolymerized with other components. Examples of the dicarboxylic acid component as a copolymerization component include isophthalic acid, naphthalenedicarboxylic acid, 4,4-diphenyldicarboxylic acid, adipic acid, sebacic acid, and any ester-forming derivative thereof. Meanwhile, examples of the diol component as a copolymerization component include diethylene glycol, hexamethylene glycol, neopentyl glycol, and cyclohexanedimethanol. Similarly, examples of the diol component also include polyoxyalkylene glycols such as polyethylene glycol and polypropylene glycol. These may be used singly or two or more kinds thereof may be used. Considering that the PET constituting PET bottles is generally copolymerized with isophthalic acid to improve formability into bottles, the chemically recycled PET preferably contains at least an isophthalic acid component as a copolymerization component.

When the number of moles of all dicarboxylic acid components in the chemically recycled polyester is 100 mol%, the number of moles of the copolymerization component is preferably 10 mol% or less, more preferably 8 mol% or less, still more preferably 5 mol% or less, still more preferably 3 mol% or less. The number of moles of the copolymerization component is preferably 0.1 mol% or more, more preferably 1 mol% or more, still more preferably 2 mol% or more. One kind or two or more kinds of chemically recycled polyester that satisfy such a suitable number of moles of the copolymerization component may be contained.

In a case where the chemically recycled polyester is chemically recycled PET, when the number of moles of all dicarboxylic acid components in the chemically recycled PET is 100 mol%, the number of moles of the isophthalic acid component is preferably 10 mol% or less, more preferably 8 mol% or less, still more preferably 5 mol% or less, still more preferably 3 mol% or less. The number of moles of the isophthalic acid component is preferably 0.1 mol% or more, more preferably 1 mol% or more, still more preferably 2 mol% or more. One kind or two or more kinds of chemically recycled PET that satisfy such a suitable number of moles of the isophthalic acid component may be contained.

The intrinsic viscosity of the chemically recycled polyester is preferably 0.50 dl/g or more, more preferably 0.55 dl/g or more, still more preferably 0.57 dl/g or more. When the intrinsic viscosity is 0.50 dl/g or more, the amount of low molecular weight components in the chemically recycled polyester can be limited to a certain degree or less, and the yellowish tinge that the biaxially oriented polyester film 8 may exhibit can be further reduced. Meanwhile, the intrinsic viscosity of the chemically recycled polyester is preferably 0.90 dl/g or less, more preferably 0.85 dl/g or less, still more preferably 0.80 dl/g or less, still more preferably 0.75 dl/g or less, still more preferably 0.69 dl/g or less. When the intrinsic viscosity is 0.90 dl/g or less, the intrinsic viscosity of the biaxially oriented polyester film 8 can be limited to a certain degree or less, the stress (namely, stretching stress) during stretching in the course of production of the biaxially oriented polyester film 8 can be prevented from becoming excessively large, and as a result, breaking of the film that may occur during stretching can be further suppressed or reduced. One kind or two or more kinds of chemically recycled polyester that satisfy such a suitable intrinsic viscosity may be contained.

In the molecular weight distribution curve of the chemically recycled polyester acquired by gel permeation chromatography (GPC), the area proportion of the region having a molecular weight of 1000 or less may be 3.5% or less, 3.0% or less, 2.5% or less, 2.2% or less, or 2.0% or less of the total peak area. Meanwhile, this area proportion may be 0.8% or more, 1.0% or more, or 1.2% or more.

The melt resistivity of the chemically recycled polyester at 285°C may be, for example, $30.0 \times 10^8 \, \Omega \cdot cm$ or less, $25.0 \times 10^8 \, \Omega \cdot cm$ or less, $20.0 \times 10^8 \, \Omega \cdot cm$ or less, or $15.0 \times 10^8 \, \Omega \cdot cm$ or less. The melt resistivity of the chemically recycled polyester at 285°C may be, for example, $0.5 \times 10^8 \, \Omega \cdot cm$ or more, $1.5 \times 10^8 \, \Omega \cdot cm$ or more, $3.0 \times 10^8 \, \Omega \cdot cm$ or more, or $5.0 \times 10^8 \, \Omega \cdot cm$ or more. The melt resistivity of the chemically recycled polyester is preferably higher than that of the fossil fuel-derived polyester and mechanically recycled polyester to be described later. One kind or two or more kinds of chemically recycled polyester that satisfy such a suitable melt resistivity may be contained.

The chemically recycled polyester may contain an alkaline earth metal compound, but preferably does not substantially contain an alkaline earth metal compound. It is possible not to contain an alkaline earth metal compound at all or to rarely contain an alkaline earth metal compound as the chemically recycled polyester is polymerized using a catalyst other than the alkaline earth metal compound (for example, a germanium-based catalyst or an antimony-based catalyst) since the catalyst and metal ions are removed in the course of recycling.

The content of the alkaline earth metal compound in the chemically recycled polyester may be, for example, less than 30 ppm, 20 ppm or less, 10 ppm or less, 5 ppm or less, 3 ppm or less, or 0 ppm based on alkaline earth metal atoms (namely, in terms of alkaline earth metal atoms).

Here, the content of the alkaline earth metal compound is the mass of the alkaline earth metal compound based on alkaline earth metal atoms with respect to the mass of the chemically recycled polyester (that is, the mass of alkaline earth metal compound based on alkaline earth metal atoms/mass of chemically recycled polyester).

One kind or two or more kinds of chemically recycled polyester that satisfy such a suitable content of the alkaline earth metal compound may be contained.

The content of a magnesium compound in the chemically recycled polyester may be, for example, less than 30 ppm, 20 ppm or less, 10 ppm or less, 5 ppm or less, 3 ppm or less, or 0 ppm based on magnesium atoms (namely, in terms of magnesium atoms). One kind or two or more kinds of chemically recycled polyester that satisfy such a suitable content of a magnesium compound may be contained.

The content of a phosphorus compound in the chemically recycled polyester may be 10 ppm or more, 15 ppm or more, 20 ppm or more, or 30 ppm or more based on phosphorus atoms (namely, in terms of phosphorus atoms). Meanwhile, the content of a phosphorus compound may be 300 ppm or less, 200 ppm or less, or 100 ppm or less based on phosphorus atoms.

Here, the content of a phosphorus compound is the mass of the phosphorus compound based on phosphorus atoms with respect to the mass of the chemically recycled polyester (that is, the mass of phosphorus compound based on phosphorus atoms/mass of chemically recycled polyester).

One kind or two or more kinds of chemically recycled polyester that satisfy such a suitable content of a phosphorus compound may be contained.

When the biaxially oriented polyester film 8 is regarded as 100% by mass, the content of the chemically recycled polyester is preferably 10% by mass or more, more preferably 20% by mass or more, still more preferably 30% by mass or more. When the content of the chemically recycled polyester is 10% by mass or more, the environmental burden can be further decreased. Meanwhile, when the biaxially oriented polyester film 8 is regarded as 100% by mass, the content of the chemically recycled polyester is preferably 95% by mass or less, more preferably 80% by mass or less, still more preferably 70% by mass or less.

The biaxially oriented polyester film 8 preferably contains fossil fuel-derived polyester, namely, virgin polyester. The fossil fuel-derived polyester is polyester obtained by condensation polymerization of a diol compound derived from fossil fuel and a dicarboxylic acid compound derived from fossil fuel. Fossil fuel-derived polyester generally has a wider range of options than chemically recycled polyester, and the range in which the physical properties of the biaxially oriented polyester film 8 can be adjusted can be expanded by the use of fossil fuel-derived polyester.

Examples of the fossil fuel-derived polyester include fossil fuel-derived polyethylene terephthalate (hereinafter sometimes referred to as "fossil fuel-derived PET"), fossil fuel-derived polybutylene terephthalate, and fossil fuel-derived polyethylene-2,6-naphthalate. Of course, these may contain a copolymerization component. For the reason that the cost can be suppressed and the mechanical properties and heat resistance are excellent, fossil fuel-derived PET is preferable and fossil fuel-derived homo-PET is more preferable. Homo-PET may contain a diethylene glycol component that is unavoidably contained. These may be used singly or two or more kinds thereof may be used.

The intrinsic viscosity of the fossil fuel-derived polyester is preferably 0.50 dl/g or more, more preferably 0.55 dl/g or more, still more preferably 0.57 dl/g or more. When the intrinsic viscosity is 0.50 dl/g or more, the amount of low molecular weight components in the fossil fuel-derived polyester can be limited to a certain degree or less, the yellowish tinge that the biaxially oriented polyester film 8 may exhibit can be further reduced. Meanwhile, the intrinsic viscosity of the fossil fuel-derived polyester is preferably 0.75 dl/g or less, more preferably 0.70 dl/g or less, still more preferably 0.68 dl/g or less, still more preferably 0.66 dl/g or less, still more preferably 0.65 dl/g or less. When the intrinsic viscosity is 0.75 dl/g or less, the stress (namely, stretching stress) during stretching in the course of production of the biaxially oriented polyester film 8 can be further prevented from becoming excessively large, and as a result, breaking of the film that may occur during stretching can be further suppressed or reduced. One kind or two or more kinds of fossil fuel-derived polyester that satisfy such a suitable intrinsic viscosity may be contained.

In the molecular weight distribution curve of the fossil fuel-derived polyester acquired by gel permeation chromatography (GPC), the area proportion of the region having a molecular weight of 1000 or less may be 3.5% or less, 3.0% or less, or 2.8% or less of the total peak area. Meanwhile, this area proportion may be 1.0% or more, 1.5% or more, 1.8% or more, or 2.0% or more.

The melt resistivity of the fossil fuel-derived polyester at 285°C may be, for example, $2.0 \times 10^8 \, \Omega \cdot cm$ or less, $1.5 \times 10^8 \, \Omega \cdot cm$ or less, $1.0 \times 10^8 \, \Omega \cdot cm$ or less, $0.5 \times 10^8 \, \Omega \cdot cm$ or less, or $0.4 \times 10^8 \, \Omega \cdot cm$ or less. The melt resistivity of the fossil fuel-derived polyester at 285°C may be, for example, $0.05 \times 10^8 \, \Omega \cdot cm$ or more or $0.1 \times 10^8 \, \Omega \cdot cm$ or more. One kind or two or more kinds of fossil fuel-derived polyester that satisfy such a suitable melt resistivity may be contained.

The fossil fuel-derived polyester preferably contains an alkaline earth metal compound. The alkaline earth metal compound may be added to the fossil fuel-derived polyester, for example, as a polymerization catalyst for producing the fossil fuel-derived polyester, or may be added in order to lower the melt resistivity of the biaxially oriented polyester film 8.

The content of the alkaline earth metal compound in the fossil fuel-derived polyester is, for example, preferably 30 ppm or more, preferably 35 ppm or more, preferably 40 ppm or more, preferably 45 ppm or more based on alkaline earth metal atoms (namely, in terms of alkaline earth metal atoms).

Here, the content of the alkaline earth metal compound is the mass of the alkaline earth metal compound based on alkaline earth metal atoms with respect to the mass of the fossil fuel-derived polyester (that is, the mass of alkaline earth metal compound based on alkaline earth metal atoms/mass of fossil fuel-derived polyester).

One kind or two or more kinds of fossil fuel-derived polyester that satisfy such a suitable content of the alkaline earth metal compound may be contained.

The content of a magnesium compound in the fossil fuel-derived polyester is, for example, preferably 30 ppm or more, preferably 35 ppm or more, preferably 40 ppm or more, preferably 45 ppm or more based on magnesium atoms (namely, in terms of magnesium atoms). One kind or two or more kinds of fossil fuel-derived polyester that satisfy such a suitable content of a magnesium compound may be contained.

The content of a phosphorus compound in the fossil fuel-derived polyester may be 10 ppm or more, 15 ppm or more, 20 ppm or more, or 30 ppm or more based on phosphorus atoms (namely, in terms of phosphorus atoms). Meanwhile, the content of a phosphorus compound may be 300 ppm or less, 200 ppm or less, or 100 ppm or less based on phosphorus atoms.

Here, the content of a phosphorus compound is the mass of the phosphorus compound based on phosphorus atoms with respect to the mass of the fossil fuel-derived polyester (that is, the mass of phosphorus compound based on phosphorus atoms/mass of fossil fuel-derived polyester).

One kind or two or more kinds of fossil fuel-derived polyester that satisfy such a suitable content of a phosphorus compound may be contained.

When the biaxially oriented polyester film 8 is regarded as 100% by mass, the content of the fossil fuel-derived polyester is preferably 5% by mass or more, more preferably 20% by mass or more, still more preferably 30% by mass or more. When the content of the fossil fuel-derived polyester is 5% by mass or more, the range in which the physical properties of the biaxially oriented polyester film 8 can be adjusted can be further expanded. Meanwhile, when the biaxially oriented polyester film 8 is regarded as 100% by mass, the content of the fossil fuel-derived polyester is preferably 90% by mass or less, more preferably 80% by mass or less, still more preferably 70% by mass or less.

The biaxially oriented polyester film 8 may or may not contain mechanically recycled polyester. The mechanically recycled polyester is polyester obtained from used polyester products without performing the operation of decomposing polyester contained in the used polyester products down to the monomer level. The mechanically recycled polyester is obtained, for example, by crushing and washing used polyester products and, if necessary, regenerating the crushed and washed polyester into flakes or pellets.

In the molecular weight distribution curve of the mechanically recycled polyester acquired by gel permeation chromatography (GPC), the area proportion of the region having a molecular weight of 1000 or less may be 4.5% or less or 4.0% or less of the total peak area. Meanwhile, this area proportion may be 2.5% or more, 3.0% or more, or 3.2% or more.

It is preferable that the biaxially oriented polyester film 8 does not substantially contain mechanically recycled polyester. Meanwhile, when the biaxially oriented polyester film 8 is regarded as 100% by mass, the content of the mechanically recycled polyester is preferably 3% by mass or less, more preferably 1% by mass or less, still more preferably 0.1% by mass or less. It is preferable that the biaxially oriented polyester film 8 does not contain mechanically recycled polyester at all.

The biaxially oriented polyester film 8 may contain biomass polyester.

When the biaxially oriented polyester film 8 is regarded as 100% by mass, the content of polyester (namely, the content of polyester including chemically recycled polyester) is preferably 80% by mass or more, more preferably 90% by mass or more, still more preferably 95% by mass or more, still more preferably 98% by mass or more.

The biaxially oriented polyester film 8 may contain a resin other than the polyester (for example, chemically recycled polyester and fossil fuel-derived polyester).

It is preferable that the biaxially oriented polyester film 8 further contains particles. Here, "the biaxially oriented polyester film 8 contains particles" means that at least one of a plurality of layers contains particles in a case where the biaxially oriented polyester film 8 includes the plurality of layers.

Examples of the particles include inorganic particles and organic particles. Examples of the inorganic particles include silica (silicon oxide) particles, alumina (aluminum oxide) particles, titanium dioxide particles, calcium carbonate particles, kaolin particles, a crystalline glass filler, kaolin particles, talc particles, silica-alumina composite oxide particles, and barium sulfate particles. Among these, silica particles, calcium carbonate particles, and alumina particles are preferable, and silica particles and calcium carbonate particles are more preferable. Silica particles are particularly preferable for the reason that the haze can be reduced. Meanwhile, examples of the organic particles include acrylic resin particles, melamine resin particles, silicone resin particles, and crosslinked polystyrene particles. Among these, acrylic resin particles are preferable. Examples of the acrylic resin particles include particles formed of polymethacrylate, polymethyl acrylate, or any derivative thereof. These may be used singly or two or more kinds thereof may be used.

The weight average particle size of the particles is preferably 0.5 $\mu$m or more, more preferably 0.8 $\mu$m or more, still more preferably 1.5 $\mu$m or more. When the weight average particle size of the particles is 0.5 $\mu$m or more, unevenness can be formed on the surface of the biaxially oriented polyester film 8. Therefore, slipperiness can be imparted to the biaxially oriented polyester film 8. In addition to this, air that may be trapped when the biaxially oriented polyester film 8 is wound into a roll is likely to be released, and the generation of defects in appearance such as wrinkles and air bubbles can be reduced. Meanwhile, the weight average particle size of the particles is preferably 4.0 $\mu$m or less, more preferably 3.8 $\mu$m or less, still more preferably 3.0 $\mu$m or less. When the weight average particle size of the particles is 4.0 $\mu$m or less, the generation of coarse protrusions on the biaxially oriented polyester film 8 can be prevented.

The content of the particles in the biaxially oriented polyester film 8 is preferably 100 ppm or more. When the content of the particles is 100 ppm or more, slipperiness can be further imparted to the biaxially oriented polyester film 8 as well as the generation of defects in appearance can be further reduced. Meanwhile, the content of the particles in the biaxially oriented polyester film 8 is preferably 1000 ppm or less, more preferably 800 ppm or less. When the content of the particles is 1000 ppm or less, the arithmetic mean height Sa and maximum protrusion height Sp on the surface of the biaxially oriented polyester film 8 can be prevented from becoming excessively high. In addition to this, the number of voids that may be generated in the biaxially oriented polyester film 8 can be reduced, and deterioration of transparency due to voids can be thus suppressed.

Here, the content of the particles is the mass of the particles with respect to the mass of the biaxially oriented polyester film 8 (that is, the mass of particles/mass of biaxially oriented polyester film 8).

The biaxially oriented polyester film 8 may further contain additives such as an antioxidant, a heat stabilizer, an anti-static agent, an ultraviolet absorbing agent, a plasticizer, and a pigment.

In the molecular weight distribution curve of the biaxially oriented polyester film 8 acquired by gel permeation chromatography (GPC), the area proportion of the region having a molecular weight of 1000 or less is 5.5% or less of the total peak area. As this area proportion is 5.5% or less, that is, the upper limit of the content of components having a molecular weight of 1,000 or less (namely, low molecular weight components) is set, it is possible to reduce the yellowish tinge that the biaxially oriented polyester film 8 may exhibit.

As this area proportion is 5.5% or less, the peel strength between the biaxially oriented polyester film 8 and the sealant layer can also be improved in a case where a sealant layer is formed on the biaxially oriented polyester film 8. This is considered to be because the decrease in peel strength due to low molecular weight components that may act as a plastic component can be suppressed.

This area proportion may be 5.4% or less, 5.3% or less, 5.2% or less, 5.1% or less, or 5.0% or less. This area proportion may be 4.9% or less, 4.8% or less, 4.7% or less, 4.6% or less, or 4.5% or less.

In addition to this, the area proportion of the region having a molecular weight of 1000 or less is 1.9% or more of the total peak area.

As this area proportion is 1.9% or more, that is, the lower limit of the content of low molecular weight components is set, it is possible to secure the content of low molecular weight components that can act like a plasticizer.

As this area proportion is 1.9% or more, it is possible to limit the molecular weight of the polyester contained in the biaxially oriented polyester film 8 to a certain degree or less. This will be described. Since low molecular weight components are incorporated into the polyester in the course of polymerization, there is a tendency that the amount of low molecular weight components is smaller as the molecular weight of the polyester is higher and the amount of low molecular weight components is larger as the molecular weight of the polyester is lower. According to the present embodiment, since the area proportion of the region having a molecular weight of 1000 or less is 1.9% or more, that is, low molecular weight components are present in a certain amount or more, it is possible to limit the molecular weight of the polyester contained in the biaxially oriented polyester film 8 to a certain degree or less.

Therefore, the stress (namely, stretching stress) during stretching in the course of production of the biaxially oriented polyester film 8 can be prevented from becoming excessively large, and as a result, breaking of the film that may occur during stretching can be suppressed or reduced.

This area proportion may be 2.0% or more, 2.2% or more, 2.4% or more, 2.6% or more, 2.8% or more, or 3.0% or more.

The color b* value per 1 μm of the thickness of the biaxially oriented polyester film 8 is preferably 0.067 or less, more preferably 0.060 or less, still more preferably 0.050 or less. When the color b* value is 0.067 or less, the yellowish tinge that the biaxially oriented polyester film 8 may exhibit can be limited. Therefore, the influence of the color tone of the biaxially oriented polyester film 8 on the appearance (namely, external appearance) of the printed layer can be reduced, for example, in a case where a printed layer is formed on the biaxially oriented polyester film 8. The influence of the color tone of the biaxially oriented polyester film 8 on the appearance of the contents can be reduced, for example, in a case where a packaging container is produced using the biaxially oriented polyester film 8.

The intrinsic viscosity of the biaxially oriented polyester film 8 is preferably 0.50 dl/g or more, more preferably 0.51 dl/g or more. When the intrinsic viscosity is 0.50 dl/g or more, the mechanical properties, specifically, the tensile strength and puncture strength, can be improved. Meanwhile, the intrinsic viscosity of the biaxially oriented polyester film 8 is preferably 0.70 dl/g or less, more preferably 0.65 dl/g or less. When the intrinsic viscosity is 0.70 dl/g or less, the stress (namely, stretching stress) during stretching in the course of production of the biaxially oriented polyester film 8 can be further prevented from becoming excessively large, and as a result, breaking of the film that may occur during stretching can be further suppressed or reduced.

The degree of surface crystallinity of at least one surface of the biaxially oriented polyester film 8 is preferably 1.10 or more, more preferably 1.15 or more, still more preferably 1.20 or more, still more preferably 1.25 or more.

Since the crystallization rate is faster as the molecular weight of the polyester is smaller, the degree of surface crystallinity of the biaxially oriented polyester film 8 increases as the molecular weight of the polyester contained in the biaxially oriented polyester film 8 decreases.

When the degree of surface crystallinity is 1.10 or more, not only the molecular weight of the polyester contained in the biaxially oriented polyester film 8 can be further limited to a certain degree or less but also the amount of low molecular weight components that can act like a plasticizer can be further limited to a certain amount or more. Therefore, the stress (namely, stretching stress) during stretching in the course of production of the biaxially oriented polyester film 8 can be further prevented from becoming excessively large, and as a result, breaking of the film that may occur during stretching can be further suppressed or reduced.

Similarly, the degree of surface crystallinity of both surfaces of the biaxially oriented polyester film 8 is preferably 1.10 or more, more preferably 1.15 or more, still more preferably 1.20 or more, still more preferably 1.25 or more.

The degree of surface crystallinity of at least one surface of the biaxially oriented polyester film 8 is preferably 1.35 or less, more preferably 1.34 or less, still more preferably 1.33 or less, still more preferably 1.32 or less, still more preferably 1.31 or less, still more preferably 1.30 or less, still more preferably 1.29 or less, still more preferably 1.28 or less. When the degree of surface crystallinity is 1.35 or less, the biaxially oriented polyester film 8 can be prevented from becoming excessively brittle (that is, the toughness can be prevented from becoming excessively poor), and the mechanical properties, specifically, the tensile strength and puncture strength can be thus improved.

Similarly, the degree of surface crystallinity of both surfaces of the biaxially oriented polyester film 8 is preferably 1.35 or less, more preferably 1.34 or less, still more preferably 1.33 or less, still more preferably 1.32 or less, still more preferably 1.31 or less, still more preferably 1.30 or less, still more preferably 1.29 or less, still more preferably 1.28 or less.

The degree of surface crystallinity is determined by ATR-IR. In other words, the degree of surface crystallinity is determined by acquiring a spectrum by an attenuated total reflection method using a Fourier transform infrared spectrophotometer. The degree of surface crystallinity is the intensity ratio of the absorption appearing near 1340 cm$^{-1}$ to the absorption appearing near 1410 cm$^{-1}$, and is specifically the intensity at 1340 cm$^{-1}$/intensity at 1410 cm$^{-1}$. The absorption appearing near 1340 cm$^{-1}$ is absorption due to the bending vibration of $CH_2$ (trans structure) of ethylene glycol. Meanwhile, the absorption appearing near 1410 cm$^{-1}$ is absorption that is unrelated to the crystal or orientation.

The ATR-IR measurement is performed under the following conditions.

FT-IR: FTS-60A/896 manufactured by Bio-Rad Laboratories, Inc., DIGILAB Division
Single reflection ATR attachment: golden gate MKII (manufactured by SPECAC Ltd.)

Internal reflection element: Diamond
Incident angle: 45°
Resolution: 4 cm$^{-1}$
Number of times accumulated: 128 times

As the melting point of the biaxially oriented polyester film 8 is higher, the heat resistance of the biaxially oriented polyester film 8 is superior. In consideration of this, the melting point of the biaxially oriented polyester film 8 is preferably 251°C or more, more preferably 252°C or more. Meanwhile, the melting point of the biaxially oriented polyester film 8 is preferably 270°C or less, more preferably 268°C or less. When the melting point is 270°C or less, the viscosity can be prevented from becoming excessively high when raw material polyester (for example, chemically recycled polyester) for forming the biaxially oriented polyester film 8 is melt-extruded, and as a result, high-speed film formation is possible.

The melt resistivity of the biaxially oriented polyester film 8 at 285°C is preferably $1.0 \times 10^8 \, \Omega \cdot \text{cm}$ or less, more preferably $0.5 \times 10^8 \, \Omega \cdot \text{cm}$ or less, still more preferably $0.25 \times 10^8 \, \Omega \cdot \text{cm}$ or less. When the melt resistivity is $1.0 \times 10^8 \, \Omega \cdot \text{cm}$ or less, it is possible to effectively charge the surface of the polyester composition with static electricity and thus to favorably bring the polyester composition into close contact with the cooling drum when the film-shaped polyester composition melt-extruded is brought into close contact with a cooling drum by an electrostatic adhesion casting method in the course of production of the biaxially oriented polyester film 8. Therefore, the generation of pinner bubbles (that is, streak-like defects caused by air getting caught between the polyester composition and the cooling drum) can be suppressed without excessively slowing down the film formation speed. The film formation speed is the running speed (m/min) of the biaxially oriented polyester film 8 when the biaxially oriented polyester film 8 is wound into a master roll. The film formation speed can be calculated by multiplying the casting speed by the MD stretching ratio. Meanwhile, the melt resistivity may be, for example, $0.01 \times 10^8 \, \Omega \cdot \text{cm}$ or more, $0.03 \times 10^8 \, \Omega \cdot \text{cm}$ or more, or $0.05 \times 10^8 \, \Omega \cdot \text{cm}$ or more. When the melt resistivity is $0.01 \times 10^8 \, \Omega \cdot \text{cm}$ or more, the generation of foreign materials (for example, foreign materials caused by alkaline earth metal compounds that can lower the melt resistivity) can be suppressed or reduced.

The melt resistivity of the biaxially oriented polyester film 8 can be adjusted by the content of the alkaline earth metal compound and the content of the phosphorus compound in the biaxially oriented polyester film 8. For example, since the alkaline earth metal atom (hereinafter sometimes referred to as "M2") that constitutes the alkaline earth metal compound has the action of lowering the melt resistivity, and the melt resistivity can be lowered as the content of the alkaline earth metal compound is increased. Meanwhile, a phosphorus compound itself is not considered to have the action of lowering the melt resistivity of the biaxially oriented polyester film 8, but contributes to a decrease in melt resistivity in the presence of an alkaline earth metal compound. The reason for this is not clear, but this is considered to be because the generation of foreign materials can be suppressed and the amount of charge carriers can be increased as a phosphorus compound is contained.

Examples of the alkaline earth metal compound include hydroxides, aliphatic dicarboxylates (acetates, butyrates and the like, preferably acetates), and aromatic subcarboxylates of alkaline earth metals and salts of alkaline earth metals with compounds having a phenolic hydroxyl group (such as salts with phenol). Examples of the alkaline earth metals include magnesium, calcium, strontium, and barium. Among these, magnesium is preferable. More specific examples of the alkaline earth metal compound include magnesium hydroxide, magnesium acetate, calcium acetate, strontium acetate, and barium acetate. Among these, magnesium acetate is preferable. The alkaline earth metal compounds can be used singly or in combination of two or more kinds thereof. There are definitions of alkaline earth metals that do not include magnesium, but in the present specification, alkaline earth metals are used as a term that includes magnesium. In other words, in the present specification, alkaline earth metals refer to elements in Group IIa of the periodic table.

Since the catalyst and metal ions are removed in the course of recycling, chemically recycled polyester does not contain an alkaline earth metal compound at all or does not substantially contain an alkaline earth metal compound, and the content of the alkaline earth metal compound can be adjusted by concurrently using the chemically recycled polyester with other polyester (for example, fossil fuel-derived polyester and a master batch prepared by adding an alkaline earth metal compound to fossil fuel-derived polyester).

The content of the alkaline earth metal compound in the biaxially oriented polyester film 8 is preferably 20 ppm or more, more preferably 22 ppm or more, still more preferably 24 ppm or more based on alkaline earth metal atoms (namely, in terms of alkaline earth metal atoms). Meanwhile, the content of the alkaline earth metal compound is preferably 400 ppm or less, more preferably 350 ppm or less, still more preferably 300 ppm or less based on alkaline earth metal atoms. When the content of the alkaline earth metal compound is 400 ppm or less, the generation of foreign materials and coloring caused by the alkaline earth metal compound can be suppressed.

Here, the content of the alkaline earth metal compound is the mass of the alkaline earth metal compound based on alkaline earth metal atoms with respect to the mass of the biaxially oriented polyester film 8 (that is, the mass of alkaline earth metal compound based on alkaline earth metal atoms/mass of biaxially oriented polyester film 8).

The content of the magnesium compound in the biaxially oriented polyester film 8 is preferably 20 ppm or more, more preferably 22 ppm or more, still more preferably 24 ppm or more based on magnesium atoms (namely, in terms of magnesium atoms). Meanwhile, the content of the magnesium compound is preferably 400 ppm or less, more preferably 350 ppm or less, still more preferably 300 ppm or less based on magnesium atoms.

Examples of the phosphorus compound include phosphoric acids (phosphoric acid, phosphorous acid, hypophosphorous acid and the like) and esters (alkyl esters, aryl esters and the like) thereof as well as alkylphosphonic acids, arylphosphonic acids, and esters (alkyl esters, aryl esters and the like) thereof. Preferred examples of the phosphorus compound include phosphoric acid, aliphatic esters of phosphoric acid (alkyl esters and the like of phosphoric acid; for example, phosphoric acid mono-C1-6 alkyl esters such as phosphoric acid monomethyl ester, phosphoric acid monoethyl ester, and phosphoric acid monobutyl ester; phosphoric acid di-C1-6 alkyl esters such as phosphoric acid dimethyl ester, phosphoric acid diethyl ester, and phosphoric acid dibutyl ester; and phosphoric acid tri-C1-6 alkyl esters such as phosphoric acid trimethyl ester, phosphoric acid triethyl ester, and phosphoric acid tributyl ester), aromatic esters of phosphoric acid (mono-, di-, or tri-C6-9 aryl esters of phosphoric acid, such as triphenyl phosphate and tricresyl phosphate, and the like), aliphatic esters of phosphorous acid (alkyl esters of phosphorous acid, and the like; for example, mono-, di-, or tri-C 1-6 alkyl esters of phosphorous acid such as trimethyl phosphite and tributyl phosphite), alkylphosphonic acids (C1-6 alkylphosphonic acids such as methylphosphonic acid and ethylphosphonic acid), alkylphosphonic acid alkyl esters (mono- or di-C1-6 alkyl esters of C1-6 alkylphosphonic acid, such as dimethyl methylphosphonate and dimethyl ethylphosphonate, and the like), arylphosphonic acid alkyl esters (mono- or di-C1-6 alkyl esters of C6-9 arylphosphonic acids such as dimethyl phenylphosphonate and diethyl phenylphosphonate, and the like), and aryl phosphonic acid aryl esters (mono- or di-C6-9 aryl esters of C6-9 aryl phosphonic acids such as diphenyl phenylphosphonate, and the like). Particularly preferred examples of the phosphorus compound include phosphoric acid and trialkyl phosphates (trimethyl phosphate and the like). These phosphorus compounds can be used singly or in combination of two or more kinds thereof.

The content of the phosphorus compound in the biaxially oriented polyester film 8 is preferably 10 ppm or more, more preferably 11 ppm or more, still more preferably 12 ppm or more based on phosphorus atoms (namely, in terms of phosphorus atoms). When the content of the phosphorus compound is 10 ppm or more, the melt resistivity can be effectively lowered. The generation of foreign materials can be suppressed. The content of the phosphorus compound may be 20 ppm or more, 40 ppm or more, or 50 ppm or more in terms of phosphorus atoms. Meanwhile, the content of the phosphorus compound is preferably 600 ppm or less, more preferably 550 ppm or less, still more preferably 500 ppm or less based on phosphorus atoms. When the content of the phosphorus compound is 600 ppm or less, diethylene glycol can reduce the generation. The content of the phosphorus compound may be 400 ppm or less, 200 ppm or less, or 100 ppm or less in terms of phosphorus atoms.

Here, the content of the phosphorus compound is the mass of the phosphorus compound based on phosphorus atoms with respect to the mass of the biaxially oriented polyester film 8 (that is, the mass of phosphorus compound based on phosphorus atoms/mass of biaxially oriented polyester film 8).

In the biaxially oriented polyester film 8, the mass ratio of alkaline earth metal atoms (namely, M2) to phosphorus atoms (P), that is, the ratio (M2 mass/P mass) of the mass of M2 to the mass of P is preferably 1.0 or more, more preferably 1.1 or more, still more preferably 1.2 or more, still more preferably 1.3 or more, still more preferably 1.4 or more. When the ratio (M2 mass/P mass) is 1.0 or more, the melt resistivity of the biaxially oriented polyester film 8 can be effectively reduced. Meanwhile, this mass ratio is preferably 5.0 or less, more preferably 4.5 or less, still more preferably 4.0 or less. When this mass ratio is 5.0 or less, the generation of foreign materials and coloring can be suppressed.

When the number of moles of all dicarboxylic acid components in the biaxially oriented polyester film 8 is regarded as 100 mol%, the number of moles of the isophthalic acid component is preferably 0.01 mol% or more, more preferably 0.05 mol% or more, still more preferably 0.10 mol% or more, still more preferably 0.15 mol% or more, still more preferably 0.20 mol% or more, still more preferably 0.40 mol% or more. When the number of moles of the isophthalic acid component is 0.01 mol% or more, the lamination strength of the biaxially oriented polyester film 8 can be improved. Meanwhile, the number of moles of the isophthalic acid component is preferably 3.0 mol% or less, more preferably 2.5 mol% or less, still more preferably 2.2 mol% or less, still more preferably 2.0 mol% or less. When the number of moles of the isophthalic acid component is 3.0 mol% or less, it is possible to prevent the crystallinity from decreasing excessively and thus to prevent the mechanical properties from decreasing excessively. It is possible to decrease thickness unevenness of the biaxially oriented polyester film 8 and to limit the heat shrinkage rate of the biaxially oriented polyester film 8.

The tensile strength of the biaxially oriented polyester film 8 in at least one direction is preferably 180 MPa or more, more preferably 185 MPa or more, still more preferably 190 MPa or more. When the tensile strength is 180 MPa or more, the biaxially oriented polyester film 8 can be used to produce products (for example, packaging containers) having excellent strength.

Similarly, the tensile strength of the biaxially oriented polyester film 8 in the MD (namely, 0° direction), 45° direction, TD (namely, 90° direction), and 135° direction is preferably 180 MPa or more, more preferably 185 MPa or more, still more preferably 190 MPa or more.

The tensile strength of the biaxially oriented polyester film 8 in at least one direction is preferably 350 MPa or less, more preferably 340 MPa or less, still more preferably 330 MPa or less. When the tensile strength is 350 MPa or less, the stress (namely, stretching stress) during stretching in the course of production of the biaxially oriented polyester film 8 can be further prevented from becoming excessively large, and as a result, breaking of the film that may occur during stretching can be further suppressed or reduced. The tensile strength may be 320 MPa or less.

Similarly, the tensile strength of the biaxially oriented polyester film 8 in the MD (namely, 0° direction), 45° direction, TD (namely, 90° direction), and 135° direction is preferably 350 MPa or less, more preferably 340 MPa or less, still more preferably 330 MPa or less. The tensile strength may be 320 MPa or less.

The puncture strength of the biaxially oriented polyester film 8 is preferably 0.50 N/$\mu$m or more, more preferably 0.52 N/$\mu$m or more, still more preferably 0.55 N/$\mu$m or more. When the puncture strength is 0.50 N/$\mu$m or more, the biaxially oriented polyester film 8 can be used to produce products (for example, packaging containers) having excellent strength. For example, the biaxially oriented polyester film 8 can be used to produce a packaging container that hardly has a hole.

The lamination strength of the biaxially oriented polyester film 8 is preferably 3.0 N/15 mm or more, more preferably 3.5 N/15 mm or more, still more preferably 4.0 N/15 mm or more. When the lamination strength is 3.0 N/15 mm or more, in a case where the biaxially oriented polyester film 8 is provided with a sealant layer, a product (for example, a packaging container) can be produced in which peeling between these hardly occurs.

The heat shrinkage rate of the biaxially oriented polyester film 8 in the longitudinal direction, namely, MD is preferably 2.0% or less, more preferably 1.8% or less. When the heat shrinkage rate is 2.0% or less, the frequency of occurrence of deformation and wrinkling due to heat can be reduced when the biaxially oriented polyester film 8 is subjected to secondary processing such as vapor-deposition processing and printing processing. The heat shrinkage rate in the MD may be, for example, 0.5% or more or 0.8% or more.

The heat shrinkage rate of the biaxially oriented polyester film 8 in the width direction, namely, TD, is preferably -1.0% or more and 1.0% or less, more preferably -0.8% or more and 0.8% or less. When the heat shrinkage rate is -1.0% or more and 1.0% or less, the frequency of occurrence of deformation and wrinkling due to heat can be reduced when secondary processing such as vapor-deposition processing and printing processing is performed.

The thickness of the biaxially oriented polyester film 8 is preferably 5 $\mu$m or more, more preferably 8 $\mu$m or more, still more preferably 9 $\mu$m or more. When the thickness is 5 $\mu$m or more, the biaxially oriented polyester film 8 is excellent in rigidity, and thus the frequency of occurrence of wrinkling when the biaxially oriented polyester film 8 is wound can be reduced. Meanwhile, the thickness of the biaxially oriented polyester film 8 is preferably 200 $\mu$m or less, more preferably 100 $\mu$m or less, still more preferably 50 $\mu$m or less, particularly preferably 25 $\mu$m or less. As the thickness is thinner, the cost can be reduced.

The biaxially oriented polyester film 8 includes a first layer 81 (hereinafter also referred to as "surface layer 81"), a second layer 82 (hereinafter also referred to as "center layer 82"), and a third layer 83 (hereinafter also referred to as "surface layer 83"). The first layer 81, the second layer 82, and the third layer 83 are arranged in this order in the thickness direction of the biaxially oriented polyester film 8. Other layers may be present between the first layer 81 and the second layer 82 and between the second layer 82 and the third layer 83.

The first layer 81, namely, the surface layer 81 preferably contains chemically recycled polyester. When the first layer 81 contains chemically recycled polyester, the environmental burden can be further decreased.

The description of the chemically recycled polyester in the first layer 81 overlaps with the above description (namely, the description of the chemically recycled polyester in the biaxially oriented polyester film 8) and will be omitted. Hence, the description of the chemically recycled polyester in the biaxially oriented polyester film 8 can also be treated as the description of the chemically recycled polyester in the first layer 81.

When the first layer 81 is regarded as 100% by mass, the content of the chemically recycled polyester is preferably 10% by mass or more, more preferably 20% by mass or more, still more preferably 30% by mass or more. When the content of the chemically recycled polyester is 10% by mass or more, the environmental burden can be further decreased. Meanwhile, when the first layer 81 is regarded as 100% by mass, the content of the chemically recycled polyester is preferably 95% by mass or less, more preferably 80% by mass or less, still more preferably 70% by mass or less.

The first layer 81 preferably contains fossil fuel-derived polyester. The description of the fossil fuel-derived polyester in the first layer 81 overlaps with the above description (namely, the description of the fossil fuel-derived polyester in the biaxially oriented polyester film 8) and will be omitted. Hence, the description of the fossil fuel-derived polyester in the biaxially oriented polyester film 8 can also be treated as the description of the fossil fuel-derived polyester in the first layer 81.

When the first layer 81 is regarded as 100% by mass, the content of the fossil fuel-derived polyester is preferably 5% by mass or more, more preferably 20% by mass or more, still more preferably 30% by mass or more. When the content is 5% by mass or more, the range in which the physical properties of the first layer 81 can be adjusted can be secured to a certain extent. Meanwhile, when the first layer 81 is regarded as 100% by mass, the content of fossil fuel-derived polyester can be set to 100% by mass or less. The content of the fossil fuel-derived polyester is preferably 90% by mass or less, more preferably 80% by mass or less, still more preferably 70% by mass or less.

The first layer 81 may contain other polyester, for example, mechanically recycled polyester and biomass polyester.

When the first layer 81 is regarded as 100% by mass, the content of polyester is preferably 80% by mass or more, more preferably 90% by mass or more, still more preferably 95% by mass or more, still more preferably 98% by mass or more.

The first layer 81 may contain a resin other than polyester.

It is preferable that the first layer 81 further contains particles. When the first layer 81 contains particles, unevenness can be formed on the surface of the biaxially oriented polyester film 8. Therefore, slipperiness can be imparted to the biaxially oriented polyester film 8. In addition to this, air that may be trapped when the biaxially oriented polyester film 8 is wound into a roll is likely to be released, and the generation of defects in appearance such as wrinkles and air bubbles can be reduced.

The description of the particles in the first layer 81 overlaps with the above description (namely, the description of the particles in the biaxially oriented polyester film 8) and will be omitted. Hence, the description of the particles in the biaxially oriented polyester film 8 can also be treated as the description of the particles in the first layer 81.

The content of the particles in the first layer 81 is preferably 500 ppm or more, more preferably 600 ppm or more, still more preferably 700 ppm or more. When the content of the particles is 500 ppm or more, slipperiness can be further imparted to the biaxially oriented polyester film 8 as well as the generation of defects in appearance can be further reduced. Meanwhile, the content of the particles in the first layer 81 may be 3000 ppm or less, 2000 ppm or less, or 1500 ppm or less.

Here, the content of the particles is the mass of the particles with respect to the mass of the first layer 81 (namely, the mass of particles/mass of first layer 81).

The thickness of the first layer 81 is preferably 0.1 $\mu$m or more, more preferably 0.3 $\mu$m or more, still more preferably 0.5 $\mu$m or more. The thickness of the first layer 81 is preferably 7 $\mu$m or less, more preferably 5 $\mu$m or less, still more preferably 3 $\mu$m or less.

The description of the third layer 83, namely, the surface layer 83 overlaps with the description of the first layer 81 and will be omitted. Hence, the description of the first layer 81 can also be treated as the description of the third layer 83. For example, the description of the chemically recycled polyester, fossil fuel-derived polyester, particles, thickness and the like for the first layer 81 can be treated as the description of these for the third layer 83. Of course, the first layer 81 and the third layer 83 can be independent of each other with regard to the composition, physical properties (for example, thickness), and the like. Hence, for example, the composition of the first layer 81 and the composition of the third layer 83 may be the same as or different from each other. The thicknesses of the two may be the same as or different from each other.

The second layer 82, namely, the central layer 82 preferably contains chemically recycled polyester. When the second layer 82 contains chemically recycled polyester, the environmental burden can be further decreased.

The description of the chemically recycled polyester in the second layer 82 overlaps with the above description (namely, the description of the chemically recycled polyester in the biaxially oriented polyester film 8) and will be omitted. Hence, the description of the chemically recycled polyester in the biaxially oriented polyester film 8 can also be treated as the description of the chemically recycled polyester in the second layer 82.

When the second layer 82 is regarded as 100% by mass, the content of the chemically recycled polyester is preferably 10% by mass or more, more preferably 20% by mass or more, still more preferably 30% by mass or more. When the content of the chemically recycled polyester is 10% by mass or more, the environmental burden can be further decreased. Meanwhile, when the second layer 82 is regarded as 100% by mass, the content of the chemically recycled polyester is preferably 95% by mass or less, more preferably 80% by mass or less, still more preferably 70% by mass or less.

The second layer 82 preferably contains fossil fuel-derived polyester. The description of the fossil fuel-derived polyester in the second layer 82 overlaps with the above description (namely, the description of the fossil fuel-derived polyester in the biaxially oriented polyester film 8) and will be omitted. Hence, the description of the fossil fuel-derived polyester in the biaxially oriented polyester film 8 can also be treated as the description of the fossil fuel-derived polyester in the second layer 82.

When the second layer 82 is regarded as 100% by mass, the content of the fossil fuel-derived polyester is preferably 5% by mass or more, more preferably 20% by mass or more, still more preferably 30% by mass or more. When the content is 5% by mass or more, the range in which the physical properties of the second layer 82 can be adjusted can be secured to a certain extent. Meanwhile, when the first layer 81 is regarded as 100% by mass, the content of the fossil fuel-derived polyester is preferably 90% by mass or less, more preferably 80% by mass or less, still more preferably 70% by mass or less.

The second layer 82 may contain other polyester, for example, mechanically recycled polyester and biomass polyester.

When the second layer 82 is regarded as 100% by mass, the content of polyester is preferably 80% by mass or more, more preferably 90% by mass or more, still more preferably 95% by mass or more, still more preferably 98% by mass or more.

The second layer 82 may contain a resin other than polyester.

The second layer 82 may or may not contain particles. The description of the particles in the second layer 82 overlaps with the above description (namely, the description of the particles in the biaxially oriented polyester film 8) and will be omitted. Hence, the description of the particles in the biaxially oriented polyester film 8 can also be treated as the description of the particles in the second layer 82. When the second layer 82 does not contain particles, voids that may form around the particles are not generated, and thus odor components can be prevented from escaping from the biaxially oriented polyester film 8. In addition to this, it is easy to use collected raw materials from the edge portions generated during the film formation step and recycled raw materials from other film formation steps in mixture at suitable time, and thus it is also advantageous from the viewpoint of cost.

The content the particles in the second layer 82 may be 3000 ppm or less, 2000 ppm or less, 1500 ppm or less, 1000 ppm or less, 500 ppm or less, 100 ppm or less, 50 ppm or less, or 0 ppm or less.

Here, the content of the particles is the mass of the particles with respect to the mass of the second layer 82 (namely, the mass of particles/mass of second layer 82).

The thickness of the second layer 82 is preferably thicker than the thickness of the first layer 81 and the thickness of the third layer 83. The thickness of the second layer 82 is preferably 5 $\mu$m or more, more preferably 8 $\mu$m or more, still more preferably 9 $\mu$m or more. When the thickness is 5 $\mu$m or more, the biaxially oriented polyester film 8 is excellent in rigidity, and thus the frequency of occurrence of wrinkling when the biaxially oriented polyester film 8 is wound can be reduced. Meanwhile, the thickness of the biaxially oriented polyester film 8 is preferably 40 $\mu$m or less, more preferably 30 $\mu$m or less, still more preferably 20 $\mu$m or less. As the thickness is thinner, the cost can be reduced.

Several composition patterns of the first layer 81, the second layer 82, and the third layer 83 will be described supplementarily.

Examples of the first composition pattern (hereinafter also referred to as "composition pattern A") include a pattern in which the first layer 81 contains chemically recycled polyester, the second layer 82 contains chemically recycled polyester, and the third layer 83 contains chemically recycled polyester. According to the composition pattern A, the chemically recycled polyester with few impurities constitutes both surface layers of the biaxially oriented polyester film 8, and thus defects in the biaxially oriented polyester film 8 can be reduced. The description of the first layer 81, the second layer 82, and the third layer 83 in the composition pattern A overlaps with the above description (namely, the description of the first layer 81, the second layer 82, and the third layer 83) and will be omitted. Hence, the above description can also be treated as the description of the first layer 81, the second layer 82, and the third layer 83 in the composition pattern A. Hence, the first layer 81 may contain polyester other than the chemically recycled polyester, the second layer 82 may contain polyester other than the chemically recycled polyester, and the third layer 83 may contain polyester other than the chemically recycled polyester.

Examples of the second composition pattern (hereinafter also referred to as "composition pattern B") include a pattern in which the first layer 81 contains chemically recycled polyester but both the second layer 82 and the third layer 83 do not contain chemically recycled polyester. According to the composition pattern B, the chemically recycled polyester with few impurities constitutes the surface layer of the biaxially oriented polyester film 8, and thus defects in the biaxially oriented polyester film 8 can be reduced. The description of the first layer 81, the second layer 82, and the third layer 83 in the composition pattern B overlaps with the above description (namely, the description of the first layer 81, the second layer 82, and the third layer 83) and will be omitted. Hence, the above description can also be treated as the description of the first layer 81, the second layer 82, and the third layer 83 in the composition pattern B. Hence, the first layer 81 may contain polyester other than the chemically recycled polyester.

In the composition pattern B, it is preferable that the second layer 82 and/or the third layer 83 contain mechanically recycled polyester. According to this, the ratio of recycled materials can be further increased. In other words, the environmental burden can be further decreased.

Examples of the third composition pattern (hereinafter also referred to as "composition pattern C") include a pattern in which the second layer 82 contains chemically recycled polyester but both the first layer 81 and the third layer 83 do not contain chemically recycled polyester. The description of the first layer 81, the second layer 82, and the third layer 83 in the composition pattern C overlaps with the above description (namely, the description of the first layer 81, the second layer 82, and the third layer 83) and will be omitted. Hence, the above description can also be treated as the description of the first layer 81, the second layer 82, and the third layer 83 in the composition pattern C. Hence, the second layer 82 may contain polyester other than the chemically recycled polyester.

In the composition pattern C, it is preferable that the first layer 81 and/or the third layer 83 contain mechanically recycled polyester. According to this, the ratio of recycled materials can be further increased. In other words, the environmental burden can be further decreased.

Examples of the fourth composition pattern (hereinafter also referred to as "composition pattern D") include a pattern in which the first layer 81 contains chemically recycled polyester, and the second layer 82 contains chemically recycled polyester, but the third layer 83 does not contain chemically recycled polyester. According to the composition pattern D, the chemically recycled polyester with few impurities constitutes the surface layer of the biaxially oriented polyester film 8, and thus defects in the biaxially oriented polyester film 8 can be reduced. The description of the first layer 81, the second layer 82, and the third layer 83 in the composition pattern D overlaps with the above description (namely, the description of the first layer 81, the second layer 82, and the third layer 83) and will be omitted. Hence, the above description can also be treated as the description of the first layer 81, the second layer 82, and the third layer 83 in the composition pattern D. Hence, the first layer 81 may contain polyester other than the chemically recycled polyester and the second layer 82 may contain polyester other than the chemically recycled polyester.

In the composition pattern D, it is preferable that the third layer 83 contains mechanically recycled polyester. According to this, the ratio of recycled materials can be further increased. In other words, the environmental burden can be further decreased.

Examples of the fifth composition pattern (hereinafter also referred to as "composition pattern E") include a pattern in which the first layer 81 contains chemically recycled polyester, but the second layer 82 does not contain chemically recycled polyester, and the third layer 83 contains chemically recycled polyester. According to the composition pattern E, the chemically recycled polyester with few impurities constitutes both surface layers of the biaxially oriented polyester film 8, and thus defects in the biaxially oriented polyester film 8 can be reduced. The description of the first layer 81, the second layer 82, and the third layer 83 in the composition pattern E overlaps with the above description (namely, the description of the first layer 81, the second layer 82, and the third layer 83) and will be omitted. Hence, the above description can also be treated as the description of the first layer 81, the second layer 82, and the third layer 83 in the composition pattern E. Hence, the first layer 81 may contain polyester other than the chemically recycled polyester and the third layer 83 may contain polyester other than the chemically recycled polyester.

In the composition pattern E, it is preferable that the second layer 82 contains mechanically recycled polyester. According to this, the ratio of recycled materials can be further increased. In other words, the environmental burden can be further decreased.

The biaxially oriented polyester film 8 can be produced according to a procedure in which a raw material for forming the first layer 81 is supplied into a first extruder as well as a raw material for forming the second layer 82 is supplied into a second extruder and a raw material for forming the third layer 83 is supplied into a third extruder, and then these are melted, guided from the first, second and third extruders to a T-die, laminated in the T-die, and extruded from the T-die, solidification on a cooling drum is performed, and biaxial stretching is performed. Of course, these raw materials may be guided from the first, second and third extruders to a feed block, laminated in the feed block and then extruded from a T-die. Methods other than the T-die method, for example, a tubular method may also be adopted.

Examples of the raw material for forming the first layer 81 include chemically recycled polyester, fossil fuel-derived polyester, a particle-containing master batch, and a master batch containing an alkaline earth metal compound and a phosphorus compound (hereinafter, sometimes referred to as an "MP master batch"). It is preferable to use at least these as raw materials for forming the first layer 81.

The particle-containing master batch can contain polyester and particles (for example, silica). The particle-containing master batch can contain particles (for example, silica) at the highest concentration among the individual raw materials for forming the first layer 81.

The polyester of the particle-containing master batch may be chemically recycled polyester, fossil fuel-derived polyester, mechanically recycled polyester, or biomass polyester. Among these, chemically recycled polyester and fossil fuel-derived polyester are preferable, and fossil fuel-derived polyester is more preferable.

The content of the particles in the particle-containing master batch is preferably 5000 ppm or more, more preferably 10000 ppm or more, still more preferably 20000 ppm or more. Meanwhile, the content of the particles in the particle-containing master batch may be 1,000,000 ppm or less, 200,000 ppm or less, or 100,000 ppm or less.

Here, the content of the particles is the mass of the particles with respect to the mass of the particle-containing master batch (namely, the mass of particles/mass of particle-containing master batch).

Meanwhile, the MP master batch (namely, a master batch containing an alkaline earth metal compound and a phosphorus compound) can contain polyester, an alkaline earth metal compound, and a phosphorus compound. Among the individual raw materials for forming the first layer 81, the MP master batch contains an alkaline earth metal compound at the highest concentration and further contains a phosphorus compound at the highest concentration.

The polyester of the MP master batch may be chemically recycled polyester, fossil fuel-derived polyester, mechanically recycled polyester, or biomass polyester. Among these, chemically recycled polyester and fossil fuel-derived polyester are preferable, and fossil fuel-derived polyester is more preferable. The MP master batch can be prepared, for example, by adding a large amount of an alkaline earth metal compound and a large amount of a phosphorus compound when polyester is polymerized.

The content of the alkaline earth metal compound in the MP master batch is, for example, preferably 200 ppm or more, preferably 400 ppm or more, preferably 600 ppm or more, preferably 700 ppm or more based on alkaline earth metal atoms (namely, in terms of alkaline earth metal atoms). The content of the alkaline earth metal compound may be, for example, 3000 ppm or less, 2000 ppm or less, or 1500 ppm or less based on alkaline earth metal atoms.

Here, the content of the alkaline earth metal compound is the mass of the alkaline earth metal compound based on alkaline earth metal atoms with respect to the mass of the MP master batch (that is, the mass of alkaline earth metal compound based on alkaline earth metal atoms/mass of MP master batch).

The content of the magnesium compound in the MP master batch is, for example, preferably 200 ppm or more, preferably 400 ppm or more, preferably 600 ppm or more, preferably 700 ppm or more based on magnesium compound atoms (namely, in terms of magnesium compound atoms). The content of the alkaline earth metal compound may be, for example, 3000 ppm or less, 2000 ppm or less, or 1500 ppm or less based on magnesium compound atoms.

The content of the phosphorus compound in the MP master batch is, for example, preferably 150 ppm or more, more preferably 300 ppm or more, still more preferably 350 ppm or more, still more preferably 400 ppm or more based on phosphorus atoms (namely, in terms of phosphorus atoms). Meanwhile, the content of the phosphorus compound may be 1000 ppm or less, 800 ppm or less, or 700 ppm or less based on phosphorus atoms.

Here, the content of the phosphorus compound is the mass of the phosphorus compound based on phosphorus atoms with respect to the mass of the MP master batch (that is, the mass of phosphorus compound based on phosphorus atoms/mass of MP master batch).

Instead of the MP master batch, an alkaline earth metal compound-containing master batch and a phosphorus compound-containing master batch may be used. The alkaline earth metal compound-containing master batch can contain polyester and an alkaline earth metal compound. Among the individual raw materials for forming the first layer 81, this master batch contains an alkaline earth metal compound at the highest concentration. The phosphorus compound-containing master batch can contain polyester and a phosphorus compound. Among the individual raw materials for forming the first layer 81, this master batch contains a phosphorus compound at the highest concentration.

Examples of the raw material for forming the second layer 82 include chemically recycled polyester, fossil fuel-derived polyester, and a master batch containing an alkaline earth metal compound and a phosphorus compound (namely, an "MP master batch"). It is preferable to use at least these as raw materials for forming the second layer 82.

The description of the MP master batch in the second layer 82 overlaps with the above description (namely, the description of the MP master batch in the first layer 81) and will be omitted. Hence, the description of the MP masterbatch in the first layer 81 can also be treated as the description of the MP masterbatch in the second layer 82.

The description of the raw material for forming the third layer 83 overlaps with the description of the raw material for forming the first layer 81 and will be omitted. Hence, the description of the raw material for forming the first layer 81 can also be treated as the description of the raw material for forming the third layer 83. Of course, the raw material for forming the first layer 81 and the raw material for forming the third layer 83 can be independent of each other. Hence, for example, these raw materials may be the same as or different from each other.

These raw materials (specifically, the raw materials for forming the first layer 81, the second layer 82, and the third layer 83) are preferably dried before being supplied into the extruders. For drying, for example, a dryer such as a hopper dryer or a paddle dryer, or a vacuum dryer can be used.

The raw material for forming the first layer 81 can be supplied into the first extruder, the raw material for forming the second layer 82 can be supplied into the second extruder, and the raw material for forming the third layer 83 can be supplied into the third extruder, and these can be melted, then guided from the first, second and third extruders to a T-die or feed block, and laminated there. These raw materials are preferably melted at a temperature that is equal to or more than the melting point of the polyester in the raw material and is 200°C or more and 300°C or less.

The polyester composition in the form of a film can be extruded from the T-die and cast onto a cooling drum. By this, the polyester composition can be rapidly cooled and solidified, and as a result, a substantially unoriented and unstretched film can be obtained. The surface temperature of the cooling drum is preferably 40°C or less.

Next, the unstretched film can be biaxially stretched. By biaxial stretching, mechanical properties such as tensile strength can be enhanced. The biaxial stretching may be simultaneous biaxial stretching or sequential biaxial stretching. Among these, sequential biaxial stretching is preferable. In sequential biaxial stretching, it is preferable that the unstretched film is stretched in the longitudinal direction, namely, MD and the sheet after MD stretching is stretched in the width direction, namely, TD. According to this, the biaxially oriented polyester film 8 excellent in thickness uniformity can be produced at a relatively high film formation speed.

The temperature when the unstretched film is stretched in the longitudinal direction, namely, the MD stretching temperature, is preferably 80°C or more and 130°C or less. The stretching ratio at this time, namely, the MD stretching ratio is preferably 3.3 times or more and 4.7 times or less. When the temperature is 80°C or more and the MD stretching ratio is 4.7 times or less, the shrinkage stress in the longitudinal direction can be reduced, the bowing phenomenon can be reduced, and variations in the molecular orientation properties and heat shrinkage rate in the width direction of the biaxially oriented polyester film 8, and distortion can be diminished.

The method for stretching the unstretched film in the longitudinal direction may be, for example, a method in which the unstretched film is stretched between a plurality of rolls through multiple stages, or a method in which the unstretched film is stretched by being heated using an infrared heater or the like. The latter is preferred for the reason that it is easy to raise the temperature, further it is easy to locally heat the unstretched film, and it is possible to reduce scratches and defects caused by the roll.

At least one surface of the film stretched in the longitudinal direction may be subjected to a surface treatment such as corona treatment or plasma treatment, if necessary. At least one surface of the film stretched in the longitudinal direction may be coated with a resin dispersion or a resin solution, if necessary. By this, functions such as easy slippage, easily adhesive properties, and antistatic properties can be imparted. Both a surface treatment such as corona treatment or plasma treatment and coating with a resin dispersion or a resin solution may be carried out.

The film can be stretched in the width direction by guiding the film stretched in the longitudinal direction to a tenter, holding both ends of the film with clips, heating the film to a predetermined temperature with hot air, and then increasing the distance between the clips while conveying the film in the longitudinal direction.

The preheating temperature when the film is stretched in the width direction is preferably 100°C or more and 130°C or less. When the temperature is 100°C or more, the shrinkage stress generated when the film is stretched in the longitudinal direction can be reduced, the bowing phenomenon can be reduced, and variations in the molecular orientation properties and heat shrinkage rate in the width direction of the biaxially oriented polyester film 8, and distortion can be diminished.

The temperature when the film is stretched in the width direction, namely, the TD stretching temperature, is preferably 105°C or more and 135°C or less. When the temperature is 105°C or more, the stretching stress in the longitudinal direction generated by TD stretching can be reduced and an increase in the bowing phenomenon can be suppressed. When the temperature is 135°C or less, breaking of the film that may occur during stretching can be further suppressed or reduced in a case of using polyester having a temperature rising crystallization temperature of about 130°C (for example, chemically recycled polyester) as well.

The stretching ratio when the film is stretched in the width direction, namely, the TD stretching ratio, is preferably 3.5 times or more and 5.0 times or less. When the TD stretching ratio is 3.5 times or more, a high yield is likely to be obtained in terms of material balance, and a decrease in mechanical strength can be suppressed, and further, an increase in thickness unevenness in the width direction can also be suppressed. When the TD stretching ratio is 5.0 times or less, breaking of the film that may occur during stretching can be suppressed or reduced.

The biaxially stretched film can be heated for heat setting. The heat setting temperature is preferably 220°C or more and 250°C or less. When the heat setting temperature is 220°C or more, the heat shrinkage rate can be prevented from becoming excessively high in both the longitudinal direction and width direction. Therefore, the thermal dimensional stability during secondary processing can be improved. When the heat setting temperature is 250°C or less, an increase in the bowing phenomenon can be suppressed, and variations in the molecular orientation properties and heat shrinkage rate in the width direction of the biaxially oriented polyester film 8, and distortion can be diminished.

A heat relaxation treatment can be carried out in combination with or separately from the heat setting treatment. The relaxation rate in the width direction in the heat relaxation treatment is preferably 4% or more and 8% or less. When the relaxation rate is 4% or more, the heat shrinkage rate in the width direction can be prevented from becoming excessively high. Therefore, the thermal dimensional stability during secondary processing can be improved. When the relaxation rate is 8% or less, the stretching stress in the longitudinal direction at the central portion of the film in the width direction can be prevented from becoming excessively large and an increase in the bowing phenomenon can be suppressed.

During the heat relaxation treatment, the binding force in the width direction may decrease and the film may loosen by its own weight until the biaxially stretched film is shrunk by heat relaxation and the film may swell by the accompanying airflow of hot air blown from the nozzles installed above and below the film. In this way, since the film is in a situation to be likely to move up and down, the amount of change in the orientation angle of the biaxially oriented polyester film 8 is likely to greatly fluctuate. For example, the speed of the hot air blown from the nozzles can be adjusted so that the film can be kept parallel.

Corona discharge treatment, glow discharge treatment, flame treatment, and surface roughening treatment may be performed. Anchor coating treatment or the like may be performed.

The wide biaxially oriented polyester film 8 stretched and formed according to such a procedure may be wound using a winder into a roll. In other words, a master roll may be produced.

The width of the master roll is preferably 5000 mm or more and 10000 mm or less. When the width of the master roll is 5000 mm or more, the cost per unit area of the film can be reduced in the slitting step and secondary processing such as vapor-deposition processing and printing processing that follow.

The winding length of the master roll is preferably 10,000 m or more and 100,000 m or less. When the winding length of the master roll is 10,000 m or more, the cost per unit area of the film can be reduced in the slitting step and secondary processing such as vapor-deposition processing and printing processing that follow.

The master roll may be slit and then wound into a roll. In other words, a film roll may be produced.

The winding width of the film roll is preferably 400 mm or more and 3000 mm or less. When the winding width of the film roll is 400 mm or more, the frequency of replacing the film roll in the printing step can be decreased, and the cost can be reduced. When the winding width of the film roll is 3000 mm or less, the roll width is not excessively large, and the roll weight can be prevented from becoming excessively heavy. In other words, the handling properties are favorable.

The winding length of the film roll is preferably 2000 m or more and 65000 m or less. When the winding length of the film roll is 2000 m or more, the frequency of replacing the film roll in the printing step can be decreased, and the cost can be reduced. When the winding length of the film roll is 65000 m or less, the roll diameter is not excessively large, and the roll weight can be prevented from becoming excessively heavy. In other words, the handling properties are favorable.

The core used for the film roll is not particularly limited, and for example, a cylindrical core that is made of plastic, metal, or paper and has a size with a diameter of 3 inches (37.6 mm), 6 inches (152.2 mm), 8 inches (203.2 mm) or the like can be used.

The biaxially oriented polyester film 8 can be used for a variety of purposes. The biaxially oriented polyester film 8 can be suitably used, for example, as packaging containers, labels (for example, labels to be wrapped around the body of PET bottles), and exterior films for electronic parts such as the exterior of lithium ion batteries. Among these, the biaxially oriented polyester film 8 can be suitably used for packaging containers. Particularly, the biaxially oriented polyester film 8 can be suitably used for food packaging containers.

<3. Laminated body>

As illustrated in Fig. 2, in an embodiment, a laminated body 9 includes a biaxially oriented polyester film 8 and a sealant layer 21. Since the laminated body 9 includes the sealant layer 21, a product including the laminated body 9 (for example, a packaging container) can be produced by heat sealing.

The sealant layer 21 is a layer that can be softened at a lower temperature than the biaxially oriented polyester film 8. In other words, the sealant layer 21 can be melted at a lower temperature than the biaxially oriented polyester film 8. The sealant layer 21 may be formed, for example, using a hot-melt adhesive agent, a film, or materials other than these. Examples of the material constituting the sealant layer 21 include a thermoplastic resin. Examples of the material constituting the sealant layer 21 include polyethylene resins such as high-density polyethylene (HDPE), low-density polyethylene (LDPE), and linear low-density polyethylene (LLDPE), a polypropylene resin, an ethylene-vinyl acetate copolymer, an ethylene-$\alpha$-olefin random copolymer, and an ionomer resin. The sealant layer 21 may contain one kind of these or two or more kinds of these.

As the polyethylene, biomass polyethylene is preferred from the viewpoint of further decreasing the environmental burden. Biomass polyethylene is polyethylene produced using biomass ethanol as a raw material. In particular, biomass polyethylene produced using fermented ethanol derived from biomass obtained from plant materials as a raw material is preferable. Examples of the plant materials include corn, sugarcane, beets, and manioc.

The sealant layer 21 can contain additives. Examples of the additives include oxygen absorbing agents, plasticizers, ultraviolet stabilizers, oxidation inhibitors, coloring inhibitors, matting agents, deodorants, flame retardants, weather resistance agents, anti-static agents, friction reducers, slip agents, release agents, antioxidants, ion exchange agents, anti-blocking agents, and coloring agents.

The thickness of the sealant layer 21 may be, for example, 5 $\mu$m or more or 7 $\mu$m or more. The thickness of the sealant layer 21 may be, for example, 50 $\mu$m or less or 30 $\mu$m or less. The sealant layer 21 may be constituted of a single layer or two or more layers.

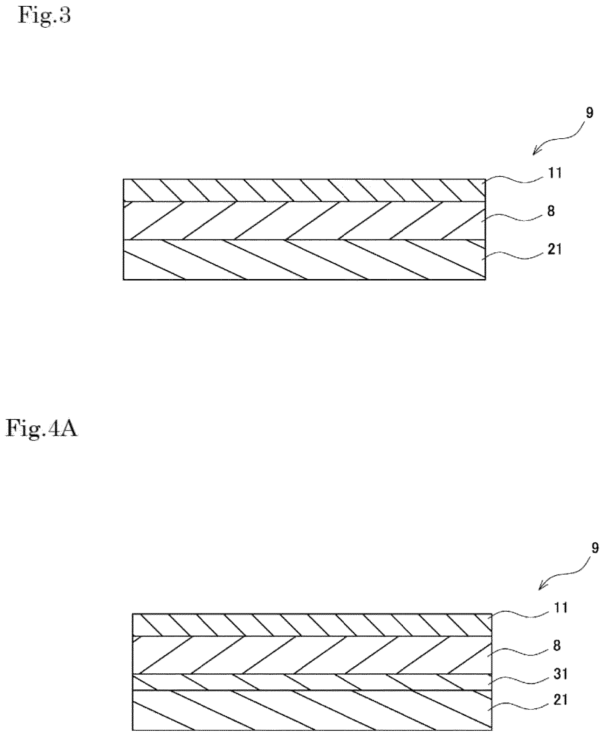

As illustrated in Fig. 3, the laminated body 9 may further include a printed layer 11. The laminated body 9 may include the printed layer 11, the biaxially oriented polyester film 8, and the sealant layer 21. The printed layer 11, the biaxially oriented polyester film 8, and the sealant layer 21 can be arranged in this order in the thickness direction of the laminated body 9 at least at a part of the laminated body 9.

The printed layer 11, namely, the ink layer 11, can impart a design to the laminated body 9. The design may be, for example, in the form of a sketch such as a figure, a pattern, a picture, a photograph, or a graphic, the form of a symbol such as a letter, a sign, or a mark, or any combination of two or more kinds of these. The design may be plain.

The shape of the printed layer 11 in a case where the laminated body 9 is viewed in the perpendicular direction can be set appropriately. In a case where the laminated body 9 is viewed in the perpendicular direction, the size of the printed layer 11 may be the same as the size of the biaxially oriented polyester film 8 or smaller than the size of the biaxially oriented polyester film 8.

The printed layer 11 can contain a resin. Examples of the resin include an acrylic resin, a urethane-based resin, a polyester-based resin, a vinyl chloride-based resin, a vinyl acetate copolymer resin, and a mixture of two or more kinds of these. The printed layer 11 can contain a coloring agent. Examples of the coloring agent may include a pigment and a dye. The printed layer 11 can contain additives. Examples of the additives include anti-static agents, light blocking agents, ultraviolet absorbing agents, plasticizers, lubricants, fillers, stabilizers, glidants, antifoaming agents, crosslinking agents, anti-blocking agents, and oxidation inhibitors.

The printed layer 11 can be formed of ink. In addition to the components mentioned above, the ink can contain, for example, a solvent. The ink may be ink prepared using raw materials derived from biomass.

The printed layer 11 can be formed by performing printing using the ink and drying. Examples of the printing method include offset printing, gravure printing, and screen printing. Examples of the drying method after printing include hot air drying, hot roll drying, and infrared drying.

The laminated body 9 may further include a paper layer. For example, the laminated body 9 may include the paper layer between the biaxially oriented polyester film 8 and the printed layer 11 or may include the paper layer between the printed layer 11 and the sealant layer 21. Among these, it is preferable to include the paper layer between the biaxially oriented polyester film 8 and the printed layer 11. In this case, the biaxially oriented polyester film 8, the paper layer, the printed layer 11, and the sealant layer 21 can be arranged (not illustrated) in this order in the thickness direction of the laminated body 9 at least at a part of the laminated body 9.

As the paper layer, for example, fine paper, art paper, coated paper, resincoated paper, cast-coated paper, paperboard, synthetic paper, and impregnated paper can be used. The thickness of the paper layer is preferably, for example, 30 g/m$^2$ or more and 400 g/m$^2$ or less.

The paper layer can be laminated on the biaxially oriented polyester film 8 via another layer (for example, an adhesive agent layer, an adhesive resin layer, or an anchor coat layer).

The adhesive agent layer can be formed using an adhesive agent, namely, a laminating adhesive agent. The adhesive agent layer can be formed, for example, by applying a laminating adhesive agent to the biaxially oriented polyester film 8 and/or the paper layer and performing drying. The laminating adhesive agent may be of onecomponent curing type or two-component curing type. The laminating adhesive agent may be of solvent type, aqueous type, or emulsion type. Examples of the laminating adhesive agent include vinyl-based adhesive agents, (meth)acrylic adhesive agents, polyamide-based adhesive agents, polyester-based adhesive agents, polyether-based adhesive agents, polyurethane-based adhesive agents, epoxy-based adhesive agents, and rubber-based adhesive agents. These may be used singly or two or more kinds thereof may be used.

The thickness of the adhesive agent layer may be, for example, 0.1 μm or more or 1 μm or more. The thickness of the adhesive agent layer may be, for example, 10 μm or less or 5 μm or less.

The adhesive resin layer contains a thermoplastic resin. Examples of the thermoplastic resin include low-density polyethylene, medium-density polyethylene, high-density polyethylene, linear low-density polyethylene, an ethylene-acrylic acid copolymer, an ethylene-ethyl acrylate copolymer, an ethylene-methacrylic acid copolymer, an ethylene-methyl methacrylate copolymer, an ethylene-maleic acid copolymer, and an ionomer resin. In addition to these, examples of the thermoplastic resin include a resin obtained by graft polymerizing and/or copolymerizing at least one of an unsaturated carboxylic acid, an unsaturated carboxylic acid, an unsaturated carboxylic anhydride, or an ester monomer onto a polyolefin resin. Examples of the thermoplastic resin also include a resin obtained by subjecting a polyolefin resin to graft modification with maleic anhydride. These may be used singly or two or more kinds thereof may be used.

The thickness of the adhesive resin layer may be, for example, 0.1 μm or more, 1 μm or more, 5 μm or more, or 10 μm or more. The thickness of the adhesive resin layer may be, for example, 100 μm or less, 50 μm or less, 10 μm or less, or 5 μm or less.

The anchor coat layer can be formed using a composition containing a resin and a curing agent. Examples of the resin include urethane-based, polyester-based, acrylic, titanium-based, isocyanate-based, imine-based, and polybutadiene-based resins. Among these, urethane-based, polyester-based and acrylic resins are preferable. From the viewpoint of close contact, a urethane resin is preferable. Meanwhile, acrylic resin is preferable from the viewpoint of water resistance. These may be used singly or two or more kinds thereof may be used. Examples of the curing agent include epoxy-based, isocyanate-based, and melamine-based curing agents. These may be used singly or two or more kinds thereof may be used.

The composition for forming the anchor coat layer preferably contains a silane coupling agent. The silane coupling agent preferably has one or more organic functional groups in the molecule. In a case where the silane coupling agent has a plurality of organic functional groups (that is, one or more) in the molecule, the plurality of organic functional groups may be the same as or different from each other. In other words, the plurality of organic functional groups can be independent of each other. Examples of the organic functional groups include an alkoxy group, an amino group, an epoxy group, and an isocyanate group.

The composition for forming the anchor coat layer may contain a solvent. Examples of the solvent include aromatic solvents such as benzene and toluene; alcohol-based solvents such as methanol and ethanol; ketone-based solvents such as acetone and methyl ethyl ketone; ester-based solvents such as ethyl acetate and butyl acetate; and polyhydric alcohol derivatives such as ethylene glycol monomethyl ether.

The anchor coat layer can be formed by applying a composition for forming the anchor coat layer to the biaxially oriented polyester film 8 and performing drying.

The thickness of the anchor coat layer may be, for example, 0.1 μm or more or 0.2 μm or more. The thickness of the anchor coat layer may be, for example, 2 μm or less or 1 μm or less.

As illustrated in Fig. 4A, the laminated body 9 may further include an inorganic thin film layer 31, namely, a vapor-deposition layer 31. For example, the laminated body 9 may include the printed layer 11, the biaxially oriented polyester film 8, the inorganic thin film layer 31, and the sealant layer 21. The printed layer 11, the biaxially oriented polyester film 8, the inorganic thin film layer 31, and the sealant layer 21 can be arranged in this order in the thickness direction of the laminated body 9 at least at a part of the laminated body 9. Since the laminated body 9 includes the inorganic thin film layer 31, the gas barrier properties can be improved.

The inorganic thin film layer 31 can contain an inorganic oxide. Examples of the inorganic oxide include oxides of silicon (Si), aluminum (Al), magnesium (Mg), calcium (Ca), potassium (K), tin (Sn), sodium (Na), boron (B), titanium (Ti), lead (Pb), zirconium (Zr), and yttrium (Y). As a material for forming the inorganic thin film layer 31, silicon oxide (namely, silica), aluminum oxide (namely, alumina), and a mixture of silicon oxide and aluminum oxide are preferable. Among these, a composite oxide of silicon oxide and aluminum oxide is more preferable for the reason that both flexibility and denseness of the inorganic thin film layer 31 can be achieved. In this composite oxide, with regard to the mixing ratio of silicon oxide to aluminum oxide, Al is preferably 20% by mass or more and 70% by mass or less as the mass ratio in terms of metal atoms, namely, the mass ratio in terms of metal atoms. When the mass ratio of Al is 20% by mass or more, the gas barrier properties are excellent. When the mass ratio of Al is 70% by mass or less, the inorganic thin film layer 31 can be prevented from becoming excessively hard. The silicon oxide used herein is various silicon oxides such as SiO and $SiO_2$ or a mixture thereof, and the aluminum oxide used herein is various aluminum oxides such as AlO and $Al_2O_3$ or a mixture thereof.

The inorganic thin film layer 31 may be a vapor-deposited metal layer. Examples of metals for the vapor-deposited metal layer include magnesium, aluminum, titanium, chromium, iron, nickel, copper, zinc, silver, tin, platinum, and gold. Among these, aluminum is preferable. In other words, it is preferable that the inorganic thin film layer 31 is a vapor-deposited aluminum layer.

The thickness of the inorganic thin film layer 31 may be, for example, 1 nm or more, 5 nm or more, 10 nm or more, or 20 nm or more. The thickness of the inorganic thin film layer 31 may be, for example, 200 nm or less, 100 nm or less, or 50 nm or less.

The inorganic thin film layer 31 may be constituted of a single layer or two or more layers. In a case where the inorganic thin film layer 31 is constituted of two or more layers, these layers can be independent of each other with regard to the composition, physical properties (for example, thickness), and the like.

The inorganic thin film layer 31 can be formed by, for example, a physical vapor-deposition method (PVD method) such as a vacuum vapor-deposition method, a sputtering method, or an ion plating method and a chemical vapor-deposition method (CVD method) such as a plasma enhanced chemical vapor-deposition method, a thermal chemical vapor-deposition method, or a photochemical vapor-deposition method. In a case of forming a silicon oxide/aluminum oxide-based thin film by a vacuum vapor-deposition method, for example, a mixture of $SiO_2$ and $Al_2O_3$ and a mixture of $SiO_2$ and Al can be used as the raw material for vapor-deposition. These raw materials for vapor-deposition are preferably in the form of particles. The size of the particles is desirably a size so that the pressure during vapor-deposition does not change. For example, the particle size is preferably 1 mm to 5 mm. For heating, systems such as resistive heating, high frequency induction heating, electron beam heating, and laser heating can be adopted. It is also possible to adopt reactive vapor-deposition by introduction of oxygen, nitrogen, hydrogen, argon, carbon dioxide gas, water vapor or the like as a reaction gas or use of a means such as ozone addition or ion assist. The film forming conditions can also be arbitrarily changed so that a bias is applied to the body to be vapor-deposited (laminated film to be subjected to vapor-deposition) or the body to be vapor-deposited is heated or cooled. Such vapor-deposition materials, reaction gases, application of a bias to the body to be vapor-deposited, heating/cooling, and the like can be similarly changed in the case of adopting a sputtering method and a CVD method as well.

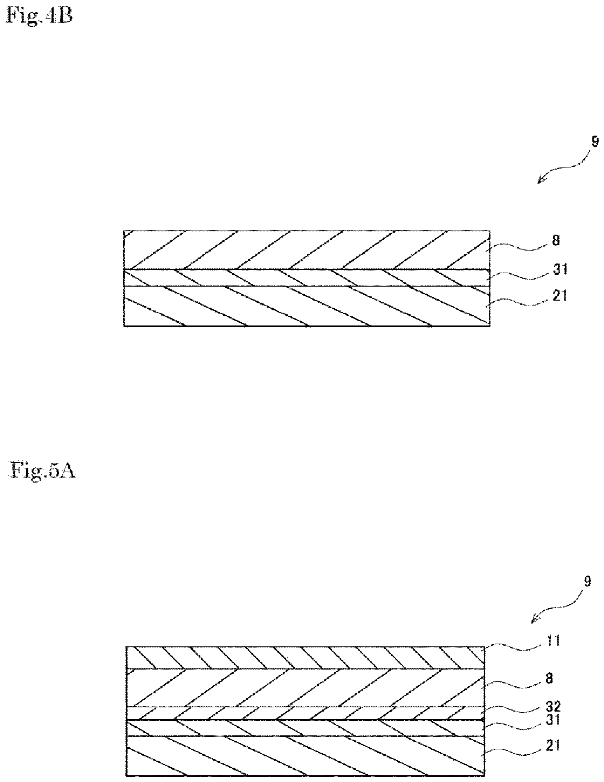

As illustrated in Fig. 4B, the laminated body 9 may include the biaxially oriented polyester film 8, the inorganic thin film layer 31, and the sealant layer 21. The biaxially oriented polyester film 8, the inorganic thin film layer 31, and the sealant layer 21 can be arranged in this order in the thickness direction of the laminated body 9 at least at a part of the laminated body 9.

As illustrated in Fig. 5A, the laminated body 9 may further include an anchor coat layer 32, namely, a covering layer 32. For example, the laminated body 9 may include the printed layer 11, the biaxially oriented polyester film 8, the anchor coat layer 32, the inorganic thin film layer 31, and the sealant layer 21. The printed layer 11, the biaxially oriented polyester film 8, the anchor coat layer 32, the inorganic thin film layer 31, and the sealant layer 21 can be arranged in this order in the thickness direction of the laminated body 9 at least at a part of the laminated body 9. The anchor coat layer 32 can connect the biaxially oriented polyester film 8 and the inorganic thin film layer 31 to each other.

The term "anchor coat layer" which encompasses the anchor coat layer 32 has already been described, but additional description will be given since there are unique suitable examples of the anchor coat layer 32.

The anchor coat layer 32 can be formed using a composition containing a resin and a curing agent. Examples of the resin include urethane-based, polyester-based, acrylic, titanium-based, isocyanate-based, imine-based, and polybutadiene-based resins. Among these, urethane-based, polyester-based and acrylic resins are preferable. From the viewpoint of close contact, a urethane resin is preferable. Meanwhile, acrylic resin is preferable from the viewpoint of water resistance. These may be used singly or two or more kinds thereof may be used. Examples of the curing agent include epoxy-based, isocyanate-based, and melamine-based curing agents. These may be used singly or two or more kinds thereof may be used.

The composition for forming the anchor coat layer 32 preferably contains a silane coupling agent. The silane coupling agent preferably has one or more organic functional groups in the molecule. In a case where the silane coupling agent has a plurality of organic functional groups (that is, one or more) in the molecule, the plurality of organic functional groups may be the same as or different from each other. In other words, the plurality of organic functional groups can be independent of each other. Examples of the organic functional groups include an alkoxy group, an amino group, an epoxy group, and an isocyanate group.

The composition for forming the anchor coat layer 32 preferably contains a resin having an oxazoline group, namely, a polymer having an oxazoline group. The oxazoline group exhibits high affinity for the inorganic thin film layer 31, further can react with a metal hydroxide and an oxygen deficient portion of an inorganic oxide that may be generated during formation of the inorganic thin film layer 31, and thus can come into firm close contact with the inorganic thin film layer 31. In addition to this, unreacted oxazoline groups present in the anchor coat layer 32 can react with carboxylic acid terminals (for example, carboxylic acid terminals that may be generated by hydrolysis) that may be generated in the biaxially oriented polyester film 8 and the anchor coat layer 32, and thus can form crosslinks.

The composition for forming the anchor coat layer 32 may contain a solvent. Examples of the solvent include aromatic solvents such as benzene and toluene; alcohol-based solvents such as methanol and ethanol; ketone-based solvents such as acetone and methyl ethyl ketone; ester-based solvents such as ethyl acetate and butyl acetate; and polyhydric alcohol derivatives such as ethylene glycol monomethyl ether.

The anchor coat layer 32 can be formed by applying a composition for forming the anchor coat layer 32 to the biaxially oriented polyester film 8 and performing drying.

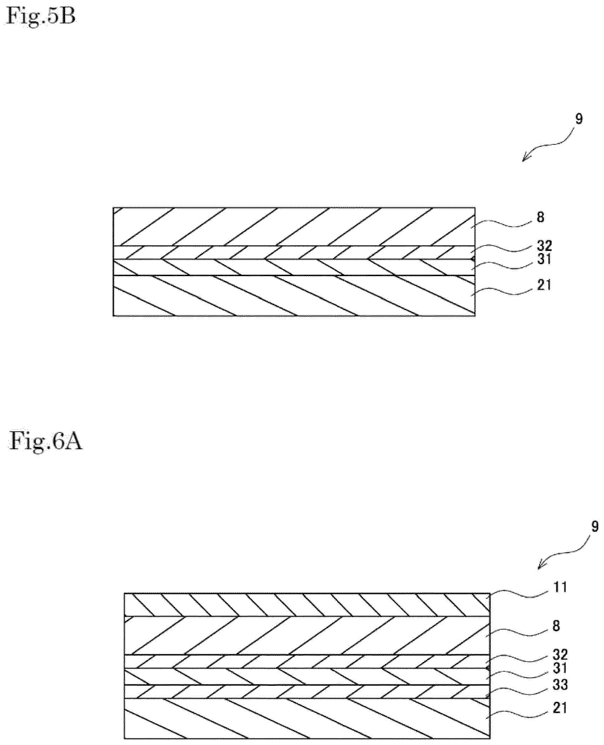

As illustrated in Fig. 5B, the laminated body 9 may include the biaxially oriented polyester film 8, the anchor coat layer 32, the inorganic thin film layer 31, and the sealant layer 21. The biaxially oriented polyester film 8, the anchor coat layer 32, the inorganic thin film layer 31, and the sealant layer 21 can be arranged in this order in the thickness direction of the laminated body 9 at least at a part of the laminated body 9.

As illustrated in Fig. 6A, the laminated body 9 may further include a protective layer 33 on the inorganic thin film layer 31. In other words, the laminated body 9 may further include a protective layer 33 that is adjacent to the inorganic thin film layer 31. For example, the laminated body 9 may include the printed layer 11, the biaxially oriented polyester film 8, the anchor coat layer 32, the inorganic thin film layer 31, the protective layer 33, and the sealant layer 21. The printed layer 11, the biaxially oriented polyester film 8, the anchor coat layer 32, the inorganic thin film layer 31, the protective layer 33, and the sealant layer 21 can be arranged in this order in the thickness direction of the laminated body 9 at least at a part of the laminated body 9. As the laminated body 9 includes the protective layer 33, gas transmission can be suppressed or reduced. The protective layer 33 plays a role of improving the gas barrier properties of the laminated body 9.

As the protective layer 33 is formed using a composition containing a resin and a curing agent, the gas barrier properties of the laminated body 9 can be improved. This will be described. Generally, the inorganic thin film layer 31 is studded with minute deficient portions. As the protective layer 33 is formed by applying such a composition onto the inorganic thin film layer 31, the composition can be permeated into deficient portions of the inorganic thin film layer 31, and as a result, the gas barrier properties of the laminated body 9 can be improved.

Examples of the resin include urethane-based, polyester-based, acrylic, titanium-based, isocyanate-based, imine-based, and polybutadiene-based resins. These may be used singly or two or more kinds thereof may be used. Examples of the curing agent include epoxy-based, isocyanate-based, and melamine-based curing agents. These may be used singly or two or more kinds thereof may be used.

Among these, a urethane-based resin, namely, a urethane resin is preferable. Since the polar groups in the urethane resin for the urethane bond interact with the inorganic thin film layer 31 as well as amorphous portions in the urethane resin exert flexibility, the damage to the inorganic thin film layer 31 can be suppressed when a bending load is applied.

The acid value of the urethane resin is preferably in the range of 10 mgKOH/g or more and 60 mgKOH/g or less. The acid value of the urethane resin is more preferably in the range of 15 mgKOH/g or more and 55 mgKOH/g or less, still more preferably in the range of 20 mgKOH/g or more and 50 mgKOH/g or less. When the acid value of the urethane resin is in the above range, the liquid stability is improved when an aqueous dispersion is prepared, the protective layer 33 can be uniformly deposited on the highly polar inorganic thin film, and thus the coating appearance is favorable.

The urethane resin has a glass transition temperature (Tg) of preferably 80°C or more, more preferably 90°C or more. By setting Tg to 80°C or more, swelling of the protective layer 33 due to molecular motion in the course of heat-moisture treatment (temperature rise to temperature retention to temperature fall) can be diminished.

The urethane resin preferably contains an aromatic or aromatic-aliphatic diisocyanate component as a main constituent component from the viewpoint of improving the gas barrier properties. Among these, it is particularly preferable to contain a meta-xylylene diisocyanate component. By using such a urethane resin, the cohesive force of the urethane bond can be further increased by the stacking effect between the aromatic rings, and as a result, favorable gas barrier properties are obtained.

The proportion of the aromatic or aromatic-aliphatic diisocyanate in the urethane resin is preferably set to be in the range of 50 mol% or more (namely, 50 mol% or more and 100 mol% or less) in 100 mol% of polyisocyanate components. The proportion of the total amount of aromatic or aromatic-aliphatic diisocyanates is preferably 60 mol% or more and 100 mol% or less, more preferably 70 mol% or more and 100 mol% or less, still more preferably 80 mol% or more and 100 mol% or less. As such a resin, the "TAKELAC (registered trademark) WPB" series commercially available from Mitsui Chemicals, Inc. can be suitably used. When the proportion of the total amount of aromatic or aromatic-aliphatic diisocyanates is 50 mol% or more, favorable gas barrier properties are obtained.

The urethane resin preferably has a carboxylic acid group (carboxyl group) from the viewpoint of improving the affinity for the inorganic thin film layer 31. In order to introduce a carboxylic acid (salt) group into the urethane resin, for example, a polyol compound having a carboxylic acid group such as dimethylolpropionic acid or dimethylolbutanoic acid as a polyol component may be introduced as a copolymerization component. When a carboxylic acid group-containing urethane resin is synthesized and then neutralized with a salt forming agent, a urethane resin in the form of an aqueous dispersion can be obtained. Examples of the salt forming agent include trialkylamines such as ammonia, trimethylamine, triethylamine, triisopropylamine, tri-n-propylamine, and tri-n-butylamine; N-alkylmorpholines such as N-methylmorpholine and N-ethylmorpholine; and N-dialkylalkanolamines such as N-dimethylethanolamine and N-diethylethanolamine. These may be used singly or two or more kinds thereof may be used concurrently.

The composition for forming the protective layer 33 may contain a solvent. Examples of the solvent include aromatic solvents such as benzene and toluene; alcohol-based solvents such as methanol and ethanol; ketone-based solvents such as acetone and methyl ethyl ketone; ester-based solvents such as ethyl acetate and butyl acetate; and polyhydric alcohol derivatives such as ethylene glycol monomethyl ether.

Meanwhile, the protective layer 33 may be formed using a composition that undergoes polycondensation by a sol-gel method. According to this, the protective layer 33 exhibiting high gas barrier properties can be formed, and thus the gas barrier properties of the laminated body 9 can be improved. Such a composition can contain an alkoxide represented by Formula 1 and at least one of a polyvinyl alcohol-based resin or an ethylene-vinyl alcohol copolymer.

$$\text{Formula 1} \qquad R^1_n M(OR^2)_m$$

$R^1$ represents an organic group having 1 to 8 carbon atoms. $R^2$ represents an organic group having 1 to 8 carbon atoms. M represents a metal atom. n represents an integer 0 or more. m represents an integer 1 or more. n + m represents the valency of M.

In Formula 1, in a case where there are a plurality of $R^1$'s, the plurality of $R^1$'s can be independent of each other. In Formula 1, in a case where there are a plurality of $R^2$'s, the plurality of $R^2$'s can be independent of each other.

As the alkoxide represented by Formula 1, at least one of a partial hydrolysate of an alkoxide or a condensate of an alkoxide by hydrolysis can be used. In the partial hydrolysate of an alkoxide, it is not necessary that all of the alkoxy groups are hydrolyzed. As the condensate of an alkoxide by hydrolysis, a dimer or higher form, specifically a dimer to hexamer, of a partially hydrolyzed alkoxide can be used.

Examples of the metal atom represented by M include silicon, zirconium, titanium, and aluminum. Among these, silicon and titanium are preferable. Alkoxides of single metal atoms or two or more different metal atoms may be used in mixture.

Examples of the organic group having 1 to 8 carbon atoms, which is represented by $R^1$, include alkyl groups such as a methyl group, an ethyl group, a n-propyl group, an i-propyl group, a n-butyl group, an i-butyl group, a sec-butyl group, a t-butyl group, a n-hexyl group, and a n-octyl group.

Examples of the organic group represented by $R^2$ include alkyl groups such as a methyl group, an ethyl group, a n-propyl group, an i-propyl group, a n-butyl group, an i-butyl group, a sec-butyl group, a t-butyl group, a n-hexyl group, and a n-octyl group.

This composition may contain a silane coupling agent. Examples of the silane coupling agent include an organic reactive group-containing organoalkoxysilane. In particular, an organoalkoxysilane having an epoxy group is preferable. Examples of the organoalkoxysilane having an epoxy group include γ-glycidoxypropyltrimethoxysilane, γ-glycidoxypropylmethyldiethoxysilane, and β-(3,4-epoxycyclohexyl)ethyltrimethoxysilane. These may be used singly or two or more kinds thereof may be used.

The composition can further contain, for example, a sol-gel catalyst, an acid, water, and an organic solvent.

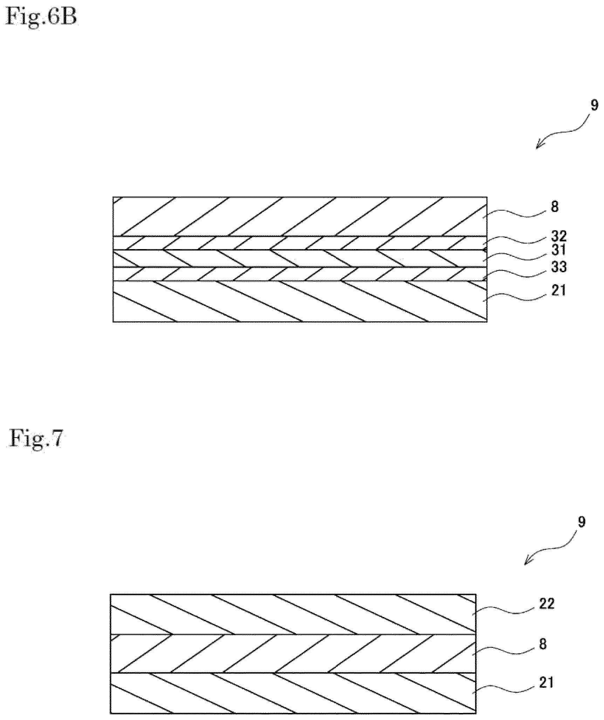

As illustrated in Fig. 6B, the laminated body 9 may include the biaxially oriented polyester film 8, the anchor coat layer 32, the inorganic thin film layer 31, the protective layer 33, and the sealant layer 21. The biaxially oriented polyester film 8, the anchor coat layer 32, the inorganic thin film layer 31, the protective layer 33, and the sealant layer 21 can be arranged in this order in the thickness direction of the laminated body 9 at least at a part of the laminated body 9.

As illustrated in Fig. 7, the laminated body 9 may further include a sealant layer 22. For example, the laminated body 9 may include the sealant layer 22, the biaxially oriented polyester film 8, and the sealant layer 21. The sealant layer 22, the biaxially oriented polyester film 8, and the sealant layer 21 can be arranged in this order in the thickness direction of the laminated body 9 at least at a part of the laminated body 9. Of course, the laminated body 9 having the lamination configuration illustrated in Figs. 3 to 6B may further include the sealant layer 22. It is preferable that, of the two surfaces of the laminated body 9, one surface is constituted of the sealant layer 21 and the other surface is constituted of the sealant layer 22. In other words, it is preferable that, of a pair of outermost layers of the laminated body 9, one outermost layer is the sealant layer 21 and the other outermost layer is the sealant layer 22. The description of the sealant layer 22 overlaps with the description of the sealant layer 21 and will be omitted. Hence, the description of the sealant layer 21 can also be treated as the description of the sealant layer 22.

In Figs. 3, 4A, 5A, and 6A, the configuration in which the printed layer 11, the biaxially oriented polyester film 8, and the sealant layer 21 are arranged in this order in the thickness direction of the laminated body 9 has been described, but of course, these may not be arranged in that order.

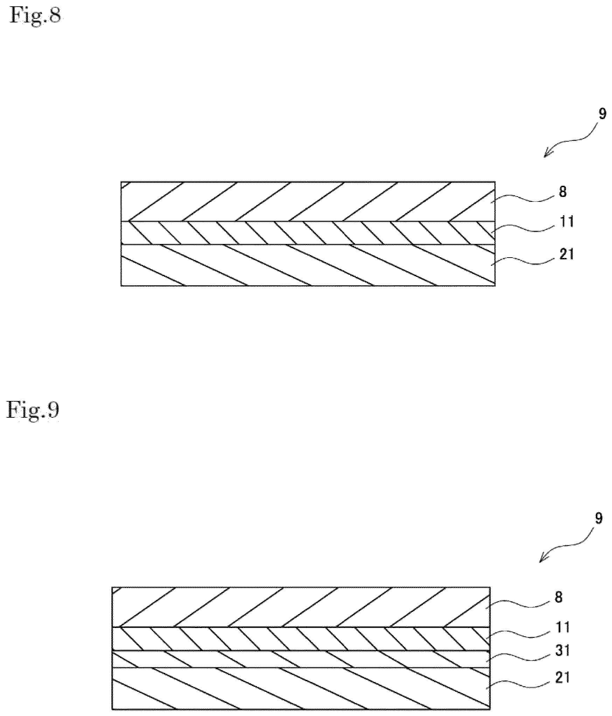

For example, as illustrated in Fig. 8, the biaxially oriented polyester film 8, the printed layer 11, and the sealant layer 21 may be arranged in this order in the thickness direction of the laminated body 9 at least at a part of the laminated body 9. The laminated body 9 can include the biaxially oriented polyester film 8, the printed layer 11, and the sealant layer 21.

As illustrated in Fig. 9, the biaxially oriented polyester film 8, the printed layer 11, the inorganic thin film layer 31, and the sealant layer 21 may be arranged in this order in the thickness direction of the laminated body 9 at least at a part of the laminated body 9. The laminated body 9 can include the biaxially oriented polyester film 8, the printed layer 11, the inorganic thin film layer 31, and the sealant layer 21.

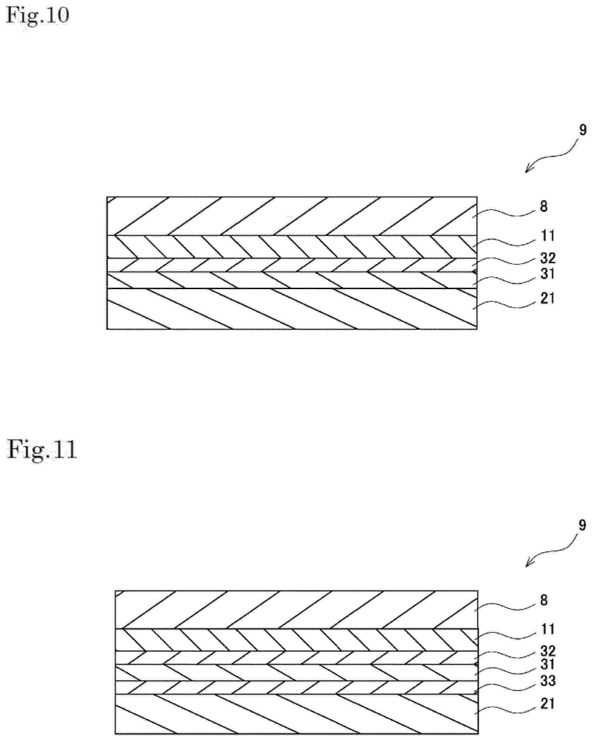

As illustrated in Fig. 10, the biaxially oriented polyester film 8, the printed layer 11, the anchor coat layer 32, the inorganic thin film layer 31, and the sealant layer 21 may be arranged in this order in the thickness direction of the laminated body 9 at least at a part of the laminated body 9. The laminated body 9 can include the biaxially oriented polyester film 8, the printed layer 11, the anchor coat layer 32, the inorganic thin film layer 31, and the sealant layer 21.

As illustrated in Fig. 11, the biaxially oriented polyester film 8, the printed layer 11, the anchor coat layer 32, the inorganic thin film layer 31, the protective layer 33, and the sealant layer 21 may be arranged in this order in the thickness direction of the laminated body 9 at least at a part of the laminated body 9. The laminated body 9 can include the biaxially oriented polyester film 8, the printed layer 11, the anchor coat layer 32, the inorganic thin film layer 31, the protective layer 33, and the sealant layer 21.

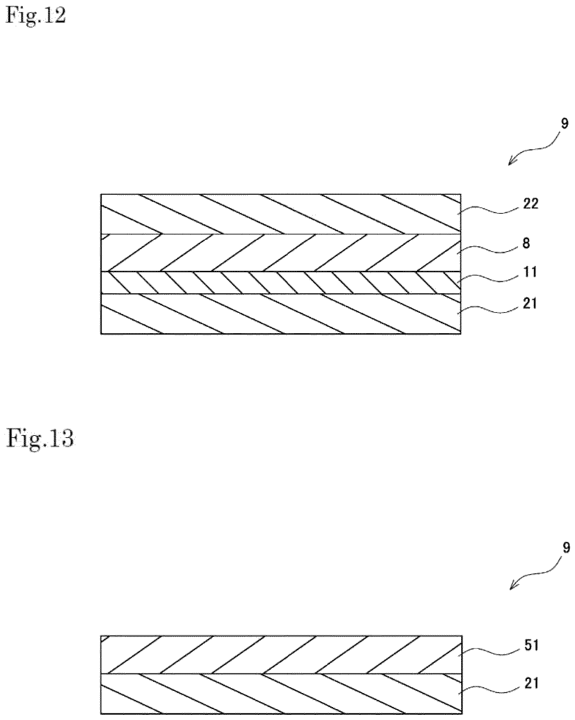

As illustrated in Fig. 12, the laminated body 9 may further include the sealant layer 22. For example, the laminated body 9 may include the sealant layer 22, the biaxially oriented polyester film 8, the printed layer 11, and the sealant layer 21. The sealant layer 22, the biaxially oriented polyester film 8, the printed layer 11, and the sealant layer 21 can be arranged in this order in the thickness direction of the laminated body 9 at least at a part of the laminated body 9. Of course, the laminated body 9 having the lamination configuration illustrated in Figs. 9 to 11 may further include the sealant layer 22. It is preferable that, of the two surfaces of the laminated body 9, one surface is constituted of the sealant layer 21 and the other surface is constituted of the sealant layer 22. In other words, it is preferable that, of a pair of outermost layers of the laminated body 9, one outermost layer is the sealant layer 21 and the other outermost layer is the sealant layer 22.

In the laminated body 9, the role played by the biaxially oriented polyester film 8 is not particularly limited. For example, the biaxially oriented polyester film 8 may play a role of holding the above-described layers (for example, sealant layer 21, printed layer 11, inorganic thin film layer 31), that is, a role as a base. Meanwhile, the biaxially oriented polyester film 8 may be used not only as a base but also for the purpose of improving some physical properties, for example, strength of the laminated body 9. In other words, the biaxially oriented polyester film 8 used for this purpose plays a role as a support. In other words, the biaxially oriented polyester film 8 may also play a role as a support.

In a case where the biaxially oriented polyester film 8 plays a role as a support, another layer (for example, a resin film, a paper layer) can play a role as a base.

In a case where the biaxially oriented polyester film 8 plays a role as a base, the laminated body 9 may further include a layer that plays a role as a support (hereinafter referred to as a "support layer"). Meanwhile, in a case where the biaxially oriented polyester film 8 plays a role as a support (that is, a support layer), the laminated body 9 may further include a layer that plays a role as a base (hereinafter referred to as a "base layer").

In Figs. 2 to 12, the laminated body 9 has been described focusing on the biaxially oriented polyester film 8, but hereinafter, the laminated body 9 will be described focusing on the base layer and the support layer rather than the biaxially oriented polyester film 8. In other words, the laminated body 9 will be described from a different angle. Hence, the description from here on may partly overlap with the description so far.

As illustrated in Fig. 13, the laminated body 9 includes a base layer 51 and the sealant layer 21. Since the laminated body 9 includes the sealant layer 21, a product including the laminated body 9 (for example, a packaging container) can be produced by heat sealing.

As the base layer 51, the biaxially oriented polyester film 8 is used. In other words, the base layer 51 is the biaxially oriented polyester film 8. Meanwhile, the base layer 51 may be constituted of a single layer or two or more layers, and for example, the base layer 51 may be constituted of the biaxially oriented polyester film 8 and a resin film (for example, a biaxially stretched nylon film) that are laminated.

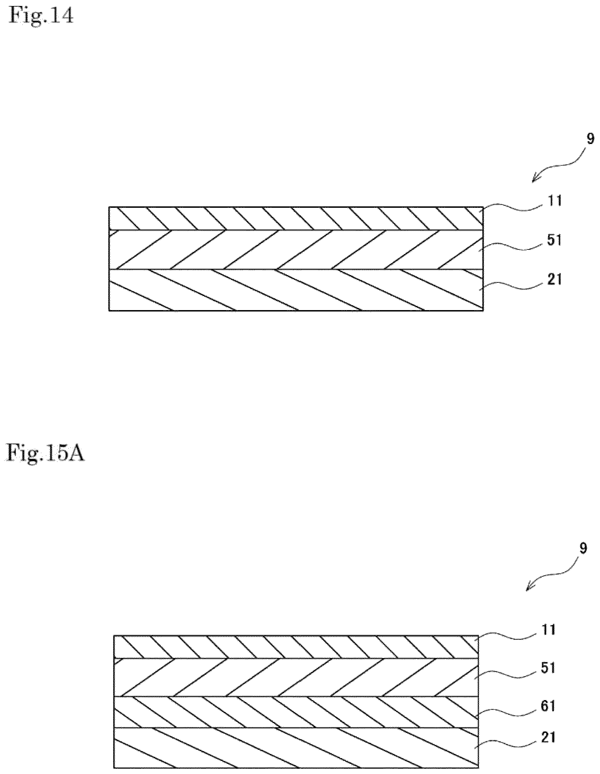

As illustrated in Fig. 14, the laminated body 9 can further include the printed layer 11. The laminated body 9 can include the printed layer 11, the base layer 51, and the sealant layer 21. The printed layer 11, the base layer 51, and the sealant layer 21 can be arranged in this order in the thickness direction of the laminated body 9 at least at a part of the laminated body 9.

As illustrated in Fig. 15A, the laminated body 9 may further include an intermediate layer 61. For example, the laminated body 9 can include the printed layer 11, the base layer 51, the intermediate layer 61, and the sealant layer 21. The printed layer 11, the base layer 51, the intermediate layer 61, and the sealant layer 21 can be arranged in this order in the thickness direction of the laminated body 9 at least at a part of the laminated body 9.

The intermediate layer 61 may include a support layer, a gas barrier layer, a metal foil, or two or more of these. Of course, the intermediate layer 61 may include layers other than these, for example, an adhesive agent layer, an adhesive resin layer, and an anchor coat layer. The intermediate layer 61 may include the printed layer 11. As the intermediate layer 61 includes a support, some physical properties, for example, strength of the laminated body 9 can be improved. As the intermediate layer 61 includes a gas barrier layer and a metal foil, the gas barrier properties of the laminated body 9 can be improved.

Examples of the support layer include a resin film and a paper layer. Examples of the resin film include films containing one or two or more of resin materials such as polyester, a (meth)acrylic resin, polyolefin (for example, polyethylene, polypropylene, or polymethylpentene), a vinyl resin, a cellulose resin, an ionomer resin, or polyamide (nylon 6, nylon 6,6, or polymetaxylylene adipamide (MXD6)). Among these, polyester is preferable. In other words, the resin film preferably contains polyester. The resin film may be a stretched resin film or an unstretched resin film. The stretched resin film may be a uniaxially stretched resin film or a biaxially stretched resin film. Among these, a biaxially stretched resin film is preferable for the reason that the dimensional stability is excellent.

The support layer can contain additives. Examples of the additives include oxygen absorbing agents, plasticizers, ultraviolet stabilizers, oxidation inhibitors, coloring inhibitors, matting agents, deodorants, flame retardants, weather resistance agents, anti-static agents, friction reducers, slip agents, release agents, antioxidants, ion exchange agents, anti-blocking agents, and coloring agents.

As the support layer, the biaxially oriented polyester film 8 may be used. In other words, the support layer may be the biaxially oriented polyester film 8.

In a case where the biaxially oriented polyester film 8 is used as the support layer, the biaxially oriented polyester film 8, a resin film, or a paper layer may be used as the base layer 51. In this way, in a case where the biaxially oriented polyester film 8 is used as the support layer, the biaxially oriented polyester film 8 may not be used as the base layer 51.

In a case where the biaxially oriented polyester film 8 is used as the support layer, examples of the base layer 51 include the biaxially oriented polyester film 8, a resin film other than the biaxially oriented polyester film 8, and a paper layer. Examples of the resin film include films containing one or two or more of resin materials such as polyester, a (meth)acrylic resin, polyolefin (for example, polyethylene, polypropylene, or polymethylpentene), a vinyl resin, a cellulose resin, an ionomer resin, or polyamide (nylon 6, nylon 6,6, or polymetaxylylene adipamide (MXD6)). Among these, polyester is preferable. In other words, the resin film preferably contains polyester. The resin film may be a stretched resin film or an unstretched resin film. The stretched resin film may be a uniaxially stretched resin film or a biaxially stretched resin film. Among these, a biaxially stretched resin film is preferable for the reason that the dimensional stability is excellent.

The intermediate layer 61 may include the anchor coat layer 32 on at least one surface of the support layer, or may include the inorganic thin film layer 31. The intermediate layer 61 may include the protective layer 33 (not illustrated).

The gas barrier layer contains a resin exhibiting gas barrier properties. Examples of the resin exhibiting gas barrier properties include an ethylene-vinyl alcohol copolymer (EVOH), polyvinyl alcohol, polyacrylonitrile, polyamide (for example, nylon 6, nylon 6,6, and polymetaxylylene adipamide (MXD6)), polyester, polyurethane, and a (meth)acrylic resin. The gas barrier layer may contain two or more kinds of resins exhibiting gas barrier properties. The gas barrier layer may further contain other resins or may further contain additives.

The thickness of the gas barrier layer may be, for example, 3 $\mu$m or more, 5 $\mu$m or more, or 7 $\mu$m or more. The thickness of the gas barrier layer may be, for example, 30 $\mu$m or less or 20 $\mu$m or less.

Examples of the metal foil include aluminum foil and magnesium foil. Among these, aluminum foil is preferable. Among these, aluminum foil containing iron is preferable from the viewpoints of pinhole resistance and ductility. The iron content is preferably 0.1% by mass or more, more preferably 0.5% by mass or more in 100% by mass of the aluminum foil. Meanwhile, the iron content is preferably 9.0% by mass or less, more preferably 2.0% by mass or more.

The metal foil may be subjected to pretreatment. Examples of the pretreatment include degreasing, acid washing, and alkali washing.

The thickness of the metal foil may be, for example, 3 $\mu$m or more or 6 $\mu$m or more. The thickness of the metal foil may be, for example, 100 $\mu$m or less or 25 $\mu$m or less.

Here, the configuration in which the printed layer 11, the base layer 51, the intermediate layer 61, and the sealant layer 21 are arranged in this order in the thickness direction of the laminated body 9 at least at a part of the laminated body 9 has been described, but the printed layer 11, the intermediate layer 61, the base layer 51, and the sealant layer 21 may be arranged in this order in the thickness direction of the laminated body 9 (not illustrated).

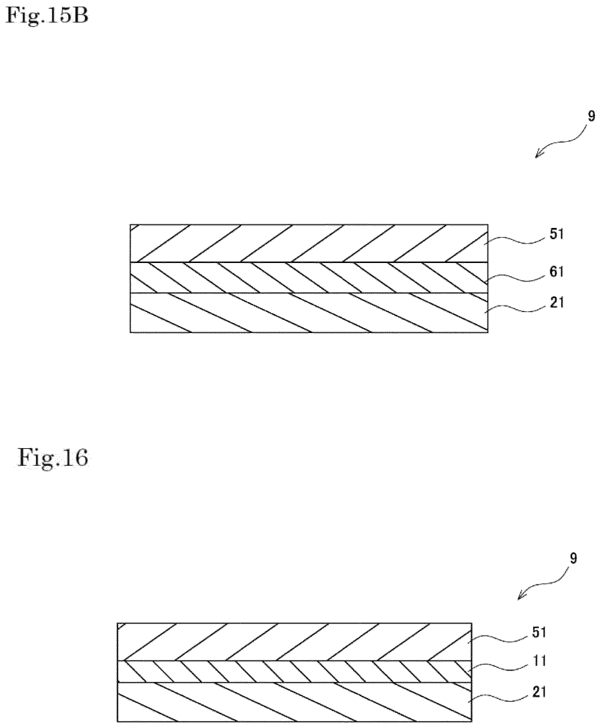

As illustrated in Fig. 15B, the laminated body 9 may include the base layer 51, the intermediate layer 61, and the sealant layer 21. The base layer 51, the intermediate layer 61, and the sealant layer 21 can be arranged in this order in the thickness direction of the laminated body 9 at least at a part of the laminated body 9.

In Figs. 14 and 15A, the configuration in which the printed layer 11, the base layer 51, and the sealant layer 21 are arranged in this order in the thickness direction of the laminated body 9 has been described, but of course, these may not be arranged in that order.

For example, as illustrated in Fig. 16, the base layer 51, the printed layer 11, and the sealant layer 21 may be arranged in this order in the thickness direction of the laminated body 9 at least at a part of the laminated body 9. The laminated body 9 can include the base layer 51, the printed layer 11, and the sealant layer 21.

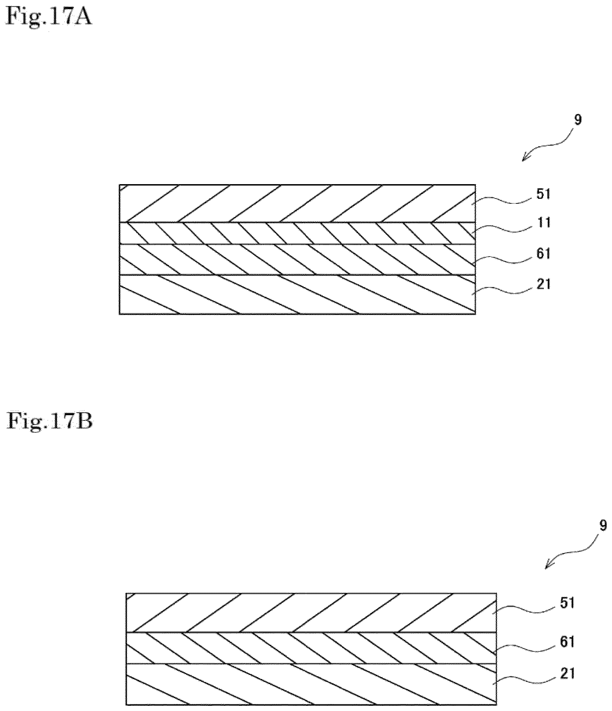

As illustrated in Fig. 17A, the base layer 51, the printed layer 11, the intermediate layer 61, and the sealant layer 21 may be arranged in this order in the thickness direction of the laminated body 9 at least at a part of the laminated body 9. The laminated body 9 can include the base layer 51, the printed layer 11, the intermediate layer 61, and the sealant layer 21.

As illustrated in Fig. 17B, the base layer 51, the intermediate layer 61, and the sealant layer 21 may be arranged in this order in the thickness direction of the laminated body 9 at least at a part of the laminated body 9. The laminated body 9 can include the base layer 51, the intermediate layer 61, and the sealant layer 21.

The laminated body 9 having the lamination configuration illustrated in Figs. 13 to 17B may further include the sealant layer 22 (not illustrated). It is preferable that, of the two surfaces of the laminated body 9, one surface is constituted of the sealant layer 21 and the other surface is constituted of the sealant layer 22. In other words, it is preferable that, of a pair of outermost layers of the laminated body 9, one outermost layer is the sealant layer 21 and the other outermost layer is the sealant layer 22.

So far, the configuration in which the laminated body 9 includes the sealant layer 21 and, if necessary, the sealant layer 22, has been described, but the laminated body 9 is not limited to this. The laminated body 9 may include a pressure sensitive adhesive layer instead of at least one of the sealant layer 21 or the sealant layer 22. The pressure sensitive adhesive layer can be formed using a pressure sensitive adhesive agent. Examples of the pressure sensitive adhesive agent include synthetic rubber such as styrene-butadiene rubber, acrylonitrile-butadiene rubber, and polyisobutylene rubber, natural rubber, acrylic resins, silicone-based resins, and polypropylene. These may be used singly or two or more kinds thereof may be used.

In this way, the laminated body 9 may have a configuration in which

the laminated body 9 includes the base layer 51 and the sealant layer 21 or a pressure sensitive adhesive layer, and the base layer 51 includes the biaxially oriented polyester film 8.

In this way, the laminated body 9 may have a configuration in which

the laminated body 9 includes the base layer 51, the intermediate layer 61, and the sealant layer 21 or a pressure sensitive adhesive layer, and the intermediate layer 61 includes the biaxially oriented polyester film 8.

The laminated body 9 has been described above with reference to Figs. 2 to 17B. Hereinafter, more specific examples will be mentioned.

Prior to this, the meanings of abbreviations will be listed below.

CRF     Biaxially oriented polyester film 8
PET     Polyethylene terephthalate
ONY     Stretched nylon
OPP     Stretched polypropylene
CPP     Unstretched polypropylene
PVC     Polyvinyl chloride
PE     Polyethylene
PEF     Polyethylene Film
Al     Aluminum
MO     Metal oxide
MOR     Metal alkoxide

Specific examples will be mentioned. In the examples mentioned here, the base layer 51 is the biaxially oriented polyester film 8.

(1) Base layer (CRF)/adhesive agent layer/heat seal layer (PEF)
(2) Base layer (CRF)/heat seal layer (PE)
(3) Base layer (CRF)/anchor coat layer/heat seal layer (PE)
(4) Base layer (CRF)/anchor coat layer/adhesive resin layer (PE)/heat seal layer (PEF)

(5) Base layer (CRF)/pressure sensitive adhesive layer

(6) Base layer (CRF)/inorganic thin film layer (MO)/protective layer (MOR)/adhesive agent layer/heat seal layer (PEF)

(7) Base layer (CRF)/inorganic thin film layer (MO)/protective layer (MOR)/heat seal layer (PE)

(8) Base layer (CRF)/inorganic thin film layer (MO)/protective layer (MOR)/anchor coat layer/heat seal layer (PE)

(9) Base layer (CRF)/inorganic thin film layer (MO)/protective layer (MOR)/anchor coat layer/adhesive resin layer (PE)/heat seal layer (PEF)

(10) Base layer (CRF)/inorganic thin film layer (Al)/pressure sensitive adhesive layer

(11) Base layer (CRF)/inorganic thin film layer (Al)/heat seal layer (PE)

(12) Base layer (CRF)/inorganic thin film layer (Al)/anchor coat layer/heat seal layer (PE)

Specific examples will be further mentioned. In the examples mentioned here as well, the base layer 51 is the biaxially oriented polyester film 8.

(1) Base layer (CRF)/printed layer/adhesive agent layer/heat seal layer (PEF)

(2) Base layer (CRF)/printed layer/heat seal layer (PE)

(3) Base layer (CRF)/printed layer/anchor coat layer/heat seal layer (PE)

(4) Base layer (CRF)/printed layer/anchor coat layer/adhesive resin layer (PE)/heat seal layer (PEF)

(5) Base layer (CRF)/printed layer/pressure sensitive adhesive layer

(6) Printed layer/base layer (CRF)/inorganic thin film layer (Al)/pressure sensitive adhesive layer

(7) Printed layer/base layer (CRF)/inorganic thin film layer (Al)/heat seal layer (PE)

(8) Printed layer/base layer (CRF)/inorganic thin film layer (Al)/anchor coat layer/heat seal layer (PE)

Specific examples will be further mentioned. In the examples mentioned here as well, the base layer 51 is the biaxially oriented polyester film 8.

(1) Base layer (CRF)/adhesive agent layer/metal foil (Al)/adhesive agent layer/support layer (ONY)/adhesive agent layer/heat seal layer (PEF)

(2) Base layer (CRF)/adhesive agent layer/metal foil (Al)/adhesive agent layer/heat seal layer (CPP)

(3) Base layer (CRF)/adhesive agent layer/inorganic thin film layer (Al)/support layer (PET)/adhesive agent layer/heat seal layer (PEF)

(4) Base layer (CRF)/adhesive agent layer/support layer (ONY)/adhesive agent layer/heat seal layer (PEF)

(5) Base layer (CRF)/adhesive agent layer/protective layer (MOR)/inorganic thin film layer (MO)/support layer (PET)/adhesive agent layer/heat seal layer (CPP)

(6) Base layer (CRF)/adhesive agent layer/inorganic thin film layer (Al)/support layer (PET)/adhesive agent layer/heat seal layer (CPP)

(7) Base layer (CRF)/adhesive agent layer/support layer (ONY)/adhesive agent layer/metal foil (Al)/adhesive agent layer/heat seal layer (CPP)

(8) Base layer (CRF)/anchor coat layer/adhesive resin layer (PE)/metal foil (Al)/heat seal layer (PE)

(9) Base layer (CRF)/anchor coat layer/adhesive resin layer (PE)/metal foil (Al)/anchor coat layer/heat seal layer (PE)

(10) Base layer (CRF)/anchor coat layer/adhesive resin layer (PE)/inorganic thin film layer (Al)/support layer (PET)/anchor coat layer/adhesive resin layer (PE)/heat seal layer (PEF)

(11) Base layer (CRF)/anchor coat layer/adhesive resin layer (PE)/metal foil (Al)/anchor coat layer/adhesive resin layer (PE)/heat seal layer (PEF)

(12) Base layer (CRF)/adhesive agent layer/support layer (PET)/adhesive agent layer/heat seal layer (PEF)/hot melt layer (hot melt adhesive agent)

(13) Base layer (CRF)/inorganic thin film layer (MO)/protective layer (MOR)/adhesive agent layer/support layer (ONY)/adhesive agent layer/heat seal layer (CPP)

(14) Base layer (CRF)/inorganic thin film layer (MO)/protective layer (MOR)/adhesive agent layer/support layer (ONY)/adhesive agent layer/heat seal layer (PEF)

(15) Base layer (CRF)/inorganic thin film layer (MO)/protective layer (MOR)/adhesive agent layer/protective layer (MOR)/inorganic thin film layer (MO)/support layer (PET)/adhesive agent layer/heat seal layer (CPP)

(16) Base layer (CRF)/inorganic thin film layer (MO)/protective layer (MOR)/adhesive agent layer/inorganic thin film layer (Al)/support layer (PET)/adhesive agent layer/heat seal layer (CPP)

(17) Base layer (CRF)/inorganic thin film layer (MO)/protective layer (MOR)/adhesive agent layer/support layer (ONY)/adhesive agent layer/metal foil (Al)/adhesive agent layer/heat seal layer (CPP)

(18) Base layer (CRF)/inorganic thin film layer (MO)/protective layer (MOR)/adhesive agent layer/support layer (PET)/adhesive agent layer/heat seal layer (PEF)/hot melt layer (hot melt adhesive agent)

(19) Heat seal layer (PEF)/adhesive agent layer/base layer (CRF)/adhesive agent layer/metal foil (Al)/adhesive agent layer/heat seal layer (PEF)

(20) Heat seal layer (PEF)/adhesive agent layer/protective layer (MOR)/inorganic thin film layer (MO)/base layer (CRF)/adhesive agent layer/heat seal layer (PEF)

(21) Heat seal layer (PE)/base layer (CRF)/adhesive agent layer/support layer (PEF)/adhesive agent layer/metal foil (Al)/adhesive agent layer/heat seal layer (PEF)

(22) Heat seal layer (PEF)/adhesive agent layer/base layer (CRF)/adhesive agent layer/support layer (PEF)/adhesive agent layer/support layer (PET)/inorganic thin film layer (MO)/protective layer (MOR)/adhesive agent layer/heat seal layer (PEF)

(23) Heat seal layer (PEF)/adhesive agent layer/base layer (CRF)/adhesive agent layer/support layer (PEF)/adhesive agent layer/protective layer (MOR)/inorganic thin film layer (MO)/support layer (PET)/adhesive agent layer/heat seal layer (PEF)

Specific examples will be further mentioned. In the examples mentioned here as well, the base layer 51 is the biaxially oriented polyester film 8.

(1) Base layer (CRF)/printed layer/adhesive agent layer/metal foil (Al)/adhesive agent layer/support layer (ONY)/adhesive agent layer/heat seal layer (PEF)

(2) Base layer (CRF)/printed layer/adhesive agent layer/metal foil (Al)/adhesive agent layer/heat seal layer (CPP)

(3) Base layer (CRF)/printed layer/adhesive agent layer/inorganic thin film layer (Al)/support layer (PET)/adhesive agent layer/heat seal layer (PEF)

(4) Base layer (CRF)/printed layer/adhesive agent layer/support layer (ONY)/adhesive agent layer/heat seal layer (PEF)

(5) Base layer (CRF)/printed layer/adhesive agent layer/protective layer (MOR)/inorganic thin film layer (MO)/support layer (PET)/adhesive agent layer/heat seal layer (CPP)

(6) Base layer (CRF)/printed layer/adhesive agent layer/inorganic thin film layer (Al)/support layer (PET)/adhesive agent layer/heat seal layer (CPP)

(7) Base layer (CRF)/printed layer/adhesive agent layer/support layer (ONY)/adhesive agent layer/metal foil (Al)/adhesive agent layer/heat seal layer (CPP)

(8) Base layer (CRF)/printed layer/anchor coat layer/adhesive resin layer (PE)/metal foil (Al)/heat seal layer (PE)

(9) Base layer (CRF)/printed layer/anchor coat layer/adhesive resin layer (PE)/metal foil (Al)/anchor coat layer/heat seal layer (PE)

(10) Base layer (CRF)/printed layer/anchor coat layer/adhesive resin layer (PE)/inorganic thin film layer (Al)/support layer (PET)/anchor coat layer/adhesive resin layer (PE)/heat seal layer (PEF)

(11) Base layer (CRF)/printed layer/anchor coat layer/adhesive resin layer (PE)/metal foil (Al)/anchor coat layer/adhesive resin layer (PE)/heat seal layer (PEF)

(12) Base layer (CRF)/printed layer/adhesive agent layer/support layer (PET)/adhesive agent layer/heat seal layer (PEF)/hot melt layer (hot melt adhesive agent)

(13) Heat seal layer (PEF)/adhesive agent layer/base layer (CRF)/printed layer/adhesive agent layer/metal foil (Al)/adhesive agent layer/heat seal layer (PEF)

(14) Heat seal layer (PEF)/adhesive agent layer/protective layer (MOR)/inorganic thin film layer (MO)/base layer (CRF)/printed layer/adhesive agent layer/heat seal layer (PEF)

(15) Heat seal layer (PE)/base layer (CRF)/printed layer/adhesive agent layer/support layer (PEF)/adhesive agent layer/metal foil (Al)/adhesive agent layer/heat seal layer (PEF)

(16) Heat seal layer (PEF)/adhesive agent layer/base layer (CRF)/printed layer/adhesive agent layer/support layer (PEF)/adhesive agent layer/support layer (PEF)/inorganic thin film layer (MO)/protective layer (MOR)/adhesive agent layer/heat seal layer (PEF)

(17) Heat seal layer (PEF)/adhesive agent layer/base layer (CRF)/printed layer/adhesive agent layer/support layer (PEF)/adhesive agent layer/protective layer (MOR)/inorganic thin film layer (MO)/support layer (PET)/adhesive agent layer/heat seal layer (PEF)

Specific examples will be further mentioned. In the examples mentioned here, the support layer is the biaxially oriented polyester film 8.

(1) Base layer (paper)/adhesive agent layer/metal foil (Al)/adhesive agent layer/support layer (CRF)/adhesive agent layer/heat seal layer (PVC)

(2) Base layer (ONY)/adhesive agent layer/support layer (CRF)/adhesive agent layer/metal foil (Al)/adhesive agent layer/heat seal layer (PEF)

(3) Base layer (PET)/inorganic thin film layer (MO)/protective layer (MOR)/adhesive agent layer/support layer (CRF)/adhesive agent layer/heat seal layer (PEF)

(4) Base layer (paper)/adhesive agent layer/support layer (CRF)/adhesive agent layer/heat seal layer (CPP)

(5) Base layer (OPP)/adhesive agent layer/support layer (CRF)/adhesive agent layer/heat seal layer (CPP)

(6) Base layer (ONY)/adhesive agent layer/support layer (CRF)/adhesive agent layer/heat seal layer (CPP)

(7) Base layer (PET)/adhesive agent layer/support layer (CRF)/adhesive agent layer/heat seal layer (PEF)/hot melt layer (hot melt adhesive agent)

(8) Base layer (OPP)/adhesive agent layer/support layer (CRF)/adhesive agent layer/heat seal layer (PEF)

(9) Base layer (PET)/inorganic thin film layer (MO)/protective layer (MOR)/adhesive agent layer/support layer (CRF)/adhesive agent layer/heat seal layer (CPP)

(10) Heat seal layer (PE)/base layer (paper)/adhesive resin layer (PE)/anchor coat layer/inorganic thin film layer (Al)/adhesive agent layer/support layer (CRF)/anchor coat layer/adhesive resin layer (PE)/heat seal layer (PEF)

(11) Base layer (paper)/adhesive resin layer (PE)/support layer (CRF)/heat seal layer (PE)

(12) Base layer (paper)/adhesive resin layer (PE)/support layer (CRF)/anchor coat layer/heat seal layer (PE)

(13) Base layer (OPP)/adhesive agent layer/support layer (CRF)/adhesive agent layer/heat seal layer (OPP)

(14) Base layer (PET)/adhesive agent layer/inorganic thin film layer (Al)/support layer (CRF)/adhesive agent layer/heat seal layer (PEF)

(15) Base layer (ONY)/anchor coat layer/adhesive resin layer (PE)/inorganic thin film layer (Al)/support layer (CRF)/anchor coat layer/adhesive resin layer (PE)/heat seal layer (PEF)

(16) Base layer (paper)/adhesive agent layer/protective layer (MOR)/inorganic thin film layer (MO)/support layer (CRF)/adhesive agent layer/heat seal layer (CPP)

(17) Base layer (OPP)/adhesive agent layer/protective layer (MOR)/inorganic thin film layer (MO)/support layer (CRF)/adhesive agent layer/heat seal layer (CPP)

(18) Base layer (PET)/inorganic thin film layer (MO)/protective layer (MOR)/adhesive agent layer/protective layer (MOR)/inorganic thin film layer (MO)/support layer (CRF)/adhesive agent layer/heat seal layer (PEF)

(19) Base layer (ONY)/adhesive agent layer/protective layer (MOR)/inorganic thin film layer (MO)/support layer (CRF)/adhesive agent layer/heat seal layer (CPP)

(20) Base layer (PET)/adhesive agent layer/protective layer (MOR)/inorganic thin film layer (MO)/support layer (CRF)/adhesive agent layer/heat seal layer (PEF)/hot melt layer (hot melt adhesive agent)

(21) Base layer (OPP)/adhesive agent layer/protective layer (MOR)/inorganic thin film layer (MO)/support layer (CRF)/adhesive agent layer/heat seal layer (PEF)

(22) Base layer (PET)/adhesive agent layer/protective layer (MOR)/inorganic thin film layer (MO)/support layer (CRF)/adhesive agent layer/heat seal layer (CPP)

(23) Base layer (paper)/adhesive resin layer (PE)/protective layer (MOR)/inorganic thin film layer (MO)/support layer (CRF)/anchor coat layer/heat seal layer (PE)

(24) Base layer (OPP)/adhesive agent layer/protective layer (MOR)/inorganic thin film layer (MO)/support layer (CRF)/adhesive agent layer/heat seal layer (OPP)

(25) Base layer (PET)/adhesive agent layer/support layer (CRF)/heat seal layer (PE)

(26) Base layer (PET)/adhesive agent layer/support layer (CRF)/anchor coat layer/heat seal layer (PE)

(27) Heat seal layer (PE)/base layer (paper)/adhesive resin layer (PE)/support layer (CRF)/adhesive agent layer/heat seal layer (PEF)

(28) Heat seal layer (PE)/base layer (paper)/adhesive resin layer (PE)/support layer (CRF)/heat seal layer (PE)

(29) Heat seal layer (PE)/base layer (paper)/adhesive resin layer (PE)/support layer (CRF)/anchor coat layer/heat seal layer (PE)

Specific examples will be further mentioned. In the examples mentioned here as well, the support layer is the biaxially oriented polyester film 8.

(1) Printed layer/base layer (paper)/adhesive agent layer/metal foil (Al)/adhesive agent layer/support layer (CRF)/adhesive agent layer/heat seal layer (PVC)

(2) Base layer (ONY)/printed layer/adhesive agent layer/support layer (CRF)/adhesive agent layer/metal foil (Al)/adhesive agent layer/heat seal layer (PEF)

(3) Printed layer/base layer (paper)/adhesive agent layer/support layer (CRF)/adhesive agent layer/heat seal layer (CPP)

(4) Base layer (OPP)/printed layer/adhesive agent layer/support layer (CRF)/adhesive agent layer/heat seal layer (CPP)

(5) Base layer (ONY)/printed layer/adhesive agent layer/support layer (CRF)/adhesive agent layer/heat seal layer (CPP)

(6) Base layer (PET)/printed layer/adhesive agent layer/support layer (CRF)/adhesive agent layer/heat seal layer (PEF)/hot melt layer (hot melt adhesive agent)

(7) Base layer (OPP)/printed layer/adhesive agent layer/support layer (CRF)/adhesive agent layer/heat seal layer (PEF)

(8) Heat seal layer (PE)/printed layer/base layer (paper)/adhesive resin layer (PE)/anchor coat layer/metal foil (Al)/adhesive agent layer/support layer (CRF)/anchor coat layer/adhesive resin layer (PE)/heat seal layer (PEF)

(9) Printed layer/base layer (paper)/adhesive resin layer (PE)/support layer (CRF)/heat seal layer (PE)

(10) Printed layer/base layer (paper)/adhesive resin layer (PE)/support layer (CRF)/anchor coat layer/heat seal layer (PE)

(11) Base layer (OPP)/adhesive agent layer/support layer (CRF)/printed layer/adhesive agent layer/heat seal layer (OPP)

(12) Base layer (PET)/printed layer/adhesive agent layer/inorganic thin film layer (Al)/support layer (CRF)/adhesive agent layer/heat seal layer (PEF)

(13) Base layer (ONY)/printed layer/anchor coat layer/adhesive resin layer (PE)/inorganic thin film layer (Al)/support layer (CRF)/anchor coat layer/adhesive resin layer (PE)/heat seal layer (PEF)

(14) Printed layer/base layer (paper)/adhesive agent layer/protective layer (MOR)/inorganic thin film layer (MO)/support layer (CRF)/adhesive agent layer/heat seal layer (CPP)

(15) Base layer (OPP)/printed layer/adhesive agent layer/protective layer (MOR)/inorganic thin film layer (MO)/support layer (CRF)/adhesive agent layer/heat seal layer (CPP)

(16) Base layer (ONY)/printed layer/adhesive agent layer/protective layer (MOR)/inorganic thin film layer (MO)/support layer (CRF)/adhesive agent layer/heat seal layer (CPP)

(17) Base layer (PET)/printed layer/adhesive agent layer/protective layer (MOR)/inorganic thin film layer (MO)/support layer (CRF)/adhesive agent layer/heat seal layer (PEF)/hot melt layer (hot melt adhesive agent)

(18) Base layer (OPP)/printed layer/adhesive agent layer/protective layer (MOR)/inorganic thin film layer (MO)/support layer (CRF)/adhesive agent layer/heat seal layer (PEF)

(19) Base layer (PET)/printed layer/adhesive agent layer/protective layer (MOR)/inorganic thin film layer (MO)/support layer (CRF)/adhesive agent layer/heat seal layer (CPP)

(20) Printed layer/base layer (paper)/adhesive resin layer (PE)/protective layer (MOR)/inorganic thin film layer (MO)/support layer (CRF)/heat seal layer (PE)

(21) Printed layer/base layer (paper)/adhesive resin layer (PE)/protective layer (MOR)/inorganic thin film layer (MO)/support layer (CRF)/anchor coat layer/heat seal layer (PE)

(22) Base layer (OPP)/printed layer/adhesive agent layer/protective layer (MOR)/inorganic thin film layer (MO)/support layer (CRF)/adhesive agent layer/heat seal layer (OPP)

(23) Base layer (PET)/adhesive agent layer/printed layer/support layer (CRF)/heat seal layer (PE)

(24) Base layer (PET)/printed layer/adhesive agent layer/support layer (CRF)/heat seal layer (PE)

(25) Base layer (PET)/adhesive agent layer/printed layer/support layer (CRF)/anchor coat layer/heat seal layer (PE)

(26) Base layer (PET)/printed layer/adhesive agent layer/support layer (CRF)/anchor coat layer/heat seal layer (PE)

(27) Heat seal layer (PE)/printed layer/base layer (paper)/adhesive resin layer (PE)/support layer (CRF)/adhesive agent layer/heat seal layer (PEF)

(28) Heat seal layer (PE)/printed layer/base layer (paper)/adhesive resin layer (PE)/support layer (CRF)/heat seal layer (PE)

(29) Heat seal layer (PE)/printed layer/base layer (paper)/adhesive resin layer (PE)/support layer (CRF)/anchor coat layer/heat seal layer (PE)

In the above-mentioned specific examples, there are several laminated bodies 9 in which the base layer 51 and the inorganic thin film layer 31 are adjacent to each other. In these laminated bodies 9, the anchor coat layer 32 may be provided between the base layer 51 and the inorganic thin film layer 31.

In the above-mentioned specific examples, there are several laminated bodies 9 in which the support layer and the inorganic thin film layer 31 are adjacent to each other. In these laminated bodies 9, the anchor coat layer 32 may be provided between the support layer and the inorganic thin film layer 31.

In the above-mentioned specific examples, there are several laminated bodies 9 that include the protective layer 33 formed using a composition containing MOR, namely, a metal alkoxide. In these laminated bodies 9, the protective layer 33 may be formed using a composition containing a resin and a curing agent.

Among the above-mentioned specific examples, there are several laminated bodies 9 that include both the base layer 51 and a support layer. In these examples, both the base layer 51 and the support layer may be the biaxially oriented polyester film 8.

The laminated body 9 can be used for a variety of purposes. The biaxially oriented polyester film 8 can be suitably used, for example, as packaging containers, labels (for example, labels to be wrapped around the body of PET bottles), and exterior films for electronic parts such as the exterior of lithium ion batteries. Among these, the biaxially oriented polyester film 8 can be suitably used for packaging containers. Particularly, the biaxially oriented polyester film 8 can be suitably used for food packaging containers.

<4. Packaging container>

The packaging container of the present embodiment includes the laminated body 9. In other words, the packaging container of the present embodiment can be produced using the laminated body 9. Here, "the packaging container includes the laminated body 9" means that at least one member includes the laminated body 9 in a case where the packaging container is constituted of a plurality of members. Examples of the packaging container include packaging bags (namely, pouches), lids, laminated tubes, paper containers, and paper cups (see, for example, JP-B-6984717). The packaging container may be a food packaging container or a non-food packaging container. In other words, the contents may be food or non-food. Among these, the packaging container is preferably a food packaging container.

Examples of the packaging bags include standing pouches, pillow bags (that is, bags with a gusseted seal), two-sided sealed bags, three-sided sealed bags, four-sided sealed bags, side face sealed bags, envelope-sealed bags, pleated sealed bags, flat-bottomed sealed bags, square-bottomed sealed bags, and bags with gussets.

<5. Various modifications can be made to embodiment described above>

Various modifications can be made to the embodiment described above. For example, one or more of the following modified examples can be selected and modifications can be made to the embodiment described above.

In the embodiment described above, the configuration in which the biaxially oriented polyester film 8 has a three-layer structure constituted of the first layer 81, the second layer 82, and the third layer 83 has been described. However, the embodiment described above is not limited to this configuration. The biaxially oriented polyester film 8 may be constituted of a single layer, or may be constituted of two layers of the first layer 81 and the second layer 82. Of course, the biaxially oriented polyester film 8 may be constituted of four or more layers.

EXAMPLES

Hereinafter, the present invention will be more specifically described by reference to Examples and Comparative Examples. Hereinafter, "parts" means "parts by mass" and "%" means "% by mass" unless otherwise stated. Polyesters A to G to be described later are sometimes collectively referred to as raw material polyester.

<Methods for measuring respective physical properties>

(Intrinsic viscosity)

In 50 ml of a mixed solvent of phenol/1,1,2,2-tetrachloroethane (60/40 (mass ratio)), 0.2 g of the sample (specifically, the raw material polyester and the biaxially oriented polyester film) was dissolved, and the intrinsic viscosity (IV) was measured using an Ostwald viscometer at 30°C. The unit of intrinsic viscosity is dl/g.

(Percentage contents of terephthalic acid component and isophthalic acid component)

The sample (specifically, the raw material polyester and the biaxially oriented polyester film) was dissolved in a solvent in which chloroform D (manufactured by Euriso-Top Co., Ltd.) and trifluoroacetic acid D1 (manufactured by Euriso-Top Co., Ltd.) were mixed at 10 : 1 (volume ratio). NMR of protons in this sample solution was measured using a nuclear magnetic resonance (NMR) spectrometer (GEMINI-200, manufactured by Varian) under the measurement conditions of a temperature of 23°C and a number of times accumulated of 64. In this NMR measurement, the peak intensity of a predetermined proton was calculated, and then the percentage contents (mol%) of the terephthalic acid component and the isophthalic acid component in 100 mol% of the acid components were calculated.

(Quantitative analysis of magnesium)

The sample (specifically, the raw material polyester and the biaxially oriented polyester film) was decomposed by incineration in a platinum crucible, then 6 mol/L hydrochloric acid was added, and evaporation to dryness was performed. This was dissolved in 1.2 mol/L hydrochloric acid, and magnesium was quantified using an inductively coupled plasma (ICP) emission spectrometer ("ICPS-2000" manufactured by Shimadzu Corporation).

(Quantitative analysis of phosphorus)

The sample (specifically, the raw material polyester and the biaxially oriented polyester film) was decomposed by dry ashing in the presence of sodium carbonate or wet-decomposed using either a sulfuric acid/nitric acid/perchloric acid system or a sulfuric acid/hydrogen peroxide water system to convert phosphorus into orthophosphoric acid. Next, the orthophosphoric acid was converted into phosphomolybdic acid through the reaction with a molybdate in a 1 mol/L sulfuric acid solution, this was reduced with hydrazine sulfate, and the absorbance of the generated heteropoly blue at 830 nm was measured using an absorptiometer (UV-150-02 manufactured by Shimadzu Corporation) (that is, colorimetric determination was performed).

(Melt resistivity)

The sample (specifically, the raw material polyester and the biaxially oriented polyester film) was melted at 285°C, a pair of electrodes was inserted into this, and a voltage of 120 V was applied. The current at this time was measured, and the melt resistivity Si ($\Omega \cdot$cm) was calculated based on the following equation.

$$Si = (A/I) \times (V/io)$$

where A is the area of electrodes ($cm^2$), I is the distance between electrodes (cm), V is the voltage (V), and io is the current (A).

(Area proportion of region having molecular weight of 1000 or less)

In a 30 mL vial, 10 g of the sample (specifically, the raw material polyester and the biaxially oriented polyester film) was placed, and the weight was measured. A liquid mixture of chloroform/HFIP = 98/2 (volume ratio) was added into this vial, and the vial was allowed to stand for 12 hours to dissolve the sample. This was then diluted with chloroform/hexafluoroisopropanol (HFIP) = 98/2 (volume ratio) to prepare a 0.1% solution. The 0.1% solution was filtered through a 0.45 $\mu$m filter (GL Chromatodisc Non-aqueous N type 13N manufactured by GL Sciences Inc.). The filtrate was subjected to gel permeation chromatographic (GPC) measurement under the following conditions.

    Column used: TSKgel SuperHM-H $\times$ 2 and TSKgel SuperH 2000 manufactured by Tosoh Corporation
    Column temperature: 40°C
    Mobile phase: chloroform/HFIP = 98/2 (volume ratio)
    Flow rate: 0.6 ml/min
    Injection volume: 20 $\mu$L
    Detection: 254 nm (UV-Vis detector)
    Molecular weight calibration: Monodisperse polystyrene (manufactured by Tosoh Corporation)
    Instrument: HLC-8300GPC manufactured by Tosoh Corporation

In the molecular weight distribution curve acquired by GPC measurement, the area proportion of the region having a molecular weight of 1000 or less was determined.
In common, in GPC analysis, the area outside the calibration curve is generally excluded from the calculation range of the GPC analysis, but in this analysis, the GPC chromatogram area (that is, the total peak area) was calculated including not only the area within the calibration curve but also the area outside the calibration curve in order to determine the area proportion of the region having a molecular weight of 1000 or less more accurately.

(Thickness)

The thickness of the biaxially oriented polyester film was measured using a dial gauge in conformity with JIS K7130-1999 Method A.

(Melting point)

Using a differential scanning calorimeter ("DSC60" manufactured by Shimadzu Corporation), the temperature of 5 mg of the sample (specifically, the biaxially oriented polyester film) was raised from 25°C to 320°C at 10°C/min, and the main peak top temperature in the endothermic curve accompanying melting was determined as the melting point.

(Tensile strength)

A test piece 15 mm in width and 100 mm in length was cut out from the biaxially oriented polyester film. This test piece was pulled at a gauge length of 50 mm and a tension speed of 200 mm/min using a tensile testing machine ("Autograph AG-I" manufactured by Shimadzu Corporation) in conformity with JIS K 7127. The tensile strength, namely, tensile breaking strength of the test piece was calculated from the stress/strain curve thus acquired. According to this procedure, the tensile strength in the MD (that is, 0° direction), 45° direction, TD (that is, 90° direction), and 135° direction was determined.

(Heat shrinkage rate)

A test piece 10 mm in width and 250 mm in length was cut out from the biaxially oriented polyester film. A pair of marks (namely, a pair of marked lines) was made on this test piece at 200 mm intervals in the length direction, and the gauge length was measured under a tension of 5 gf. This test piece was subjected to heat treatment at 150°C for 30 minutes under no load, and then the gauge length was measured. From these measurement results, the heat shrinkage rate was determined according to the following equation.

$$\text{Heat shrinkage rate (\%)} = \{(A - B)/A\} \times 100$$

where A is the gauge length before heat treatment and B is the gauge length before heat treatment.
According to this procedure, the heat shrinkage rate in the MD and TD was determined.

(Color b* value)

Ten sheets of biaxially oriented polyester film were stacked and set in a color difference meter ("ZE2000" manufactured by Nippon Denshoku Industries Co., Ltd.) and the color b* value was determined by the reflection method. The color b* value per 1 $\mu$m of thickness was calculated according to the following equation.

Color b* value per 1 $\mu$m of thickness = (color b* value when 10 sheets of biaxially oriented polyester film are stacked)/ (10 $\times$ thickness of biaxially oriented polyester film)

(Degree of surface crystallinity)

FT-IR ATR measurement was performed on both the corona-treated surface and untreated surface of the biaxially oriented polyester film under the following conditions. In other words, a spectrum was acquired by an attenuated total reflection method using a Fourier transform infrared spectrophotometer.

FT-IR: FTS-60A/896 manufactured by Bio-Rad Laboratories, Inc., DIGILAB Division
Single reflection ATR attachment: golden gate MKII (manufactured by SPECAC Ltd.)
Internal reflection element: Diamond
Incident angle: 45°
Resolution: 4 cm$^{-1}$
Number of times accumulated: 128 times

The degree of surface crystallinity was calculated by the intensity ratio (intensity at 1340 cm$^{-1}$/intensity at 1410 cm$^{-1}$) of the absorption appearing near 1340 cm$^{-1}$ to the absorption appearing near 1410 cm$^{-1}$. The absorption appearing near 1340 cm$^{-1}$ is absorption due to the bending vibration of $CH_2$ (trans structure) of ethylene glycol. Meanwhile, the absorption appearing near 1410 cm$^{-1}$ is absorption that is unrelated to the crystal or orientation.

(Puncture strength)

The puncture strength of a 5 cm square test piece cut out from the biaxially oriented polyester film was measured in conformity with JIS Z1707 using a digital force gauge ("ZTS-500N" manufactured by IMADA Co., Ltd.), a motorized test stand ("MX2-500N" manufactured by IMADA Co., Ltd.), and a fixture for film puncture test ("TKS-250N" manufactured by IMADA Co., Ltd.), The puncture strength per 1 $\mu$m of thickness was also calculated based on the puncture strength determined by this measurement (that is, the puncture strength of the biaxially oriented polyester film).

(Lamination strength)

A laminated body was produced according to a procedure in which an unstretched polypropylene film having a thickness of 70 μm ("P1147" manufactured by TOYOBO CO., LTD.) as a polyolefin sealant layer was bonded to the corona-treated surface side of the biaxially oriented polyester film using a urethane-based two-component adhesive agent (specifically, an adhesive agent in which "TAKELAC (registered trademark) A525S" manufactured by Mitsui Chemicals, Inc. and "TAKENATE (registered trademark) A50" manufactured by Mitsui Chemicals, Inc. were blended at 13.5 : 1 (mass ratio)) by a dry lamination method, and then aging was performed at 40°C for 4 days. For a test piece 15 mm in width and 200 mm in length cut out from this laminated body, the peel strength (N/15 mm) of the bonding surface between the corona-treated surface of the biaxially oriented polyester film and the polyolefin resin layer was measured. The peel strength was measured at a tension speed of 20 cm/min and a peel angle of 180 degrees using the "Tensilon UMT-II-500" manufactured by Toyo Baldwin Co., Ltd. under conditions of a temperature of 23°C and a relative humidity of 65%.

(Maximum casting speed)

While the rotation speed of the cooling drum was changed stepwise, the presence or absence of pinner bubbles on the produced unstretched film was visually inspected using a polarizing plate (manufactured by Nishida Kogyo Co., Ltd.). By this, the maximum casting speed was determined from the maximum rotation speed at which pinner bubbles were not generated.

(Film formability)

The film formability of the biaxially oriented polyester film was evaluated according to the following criteria.

Favorable: Breaking did not occur for 60 minutes or more. In other words, continuous film formation for 60 minutes or more was possible.
Acceptable: At least one time of breaking occurred for 30 minutes or more and less than 60 minutes.
Poor: At least one time of breaking occurred for less than 30 minutes.

<Raw material polyester>

(Polyester B)

Bales of PET bottles that had been sorted and collected were crushed while being circulated inside a wet crusher together with a cleaning solution (specifically, cleaning solution prepared by adding 500 g of liquid dishwashing detergent to 1000 liters of water). Heavy foreign materials such as metal, sand, and glass were settled using a gravity separator connected to the wet crusher, and flakes were taken out from the upper layer portion. These flakes were rinsed with pure water and centrifuged for dewatering. According to such a procedure, collected flakes were obtained.
In a stirring-type autoclave, 30 kg of collected flakes that had been melted in an undried state was mixed with a preheated liquid mixture, specifically, a liquid mixture of 150 kg of ethylene glycol and 150 g of zinc acetate dihydrate, and then fractions, such as water and acetic acid, having lower boiling points than ethylene glycol were removed. Next, the reaction was conducted for 4 hours at a temperature of 195°C to 200°C using a reflux condenser.
After the reaction was completed, the temperature of the contents in the reactor was lowered to 97°C to 98°C, and then hot filtration was performed using a filter to remove floating materials and settled materials.
The filtrate was further cooled, the crude BHET was examined to be completely dissolved, and then the filtrate was allowed to pass through an activated carbon bed at 50°C to 51°C and then through an anion/cation exchange mixed bed over 30 minutes. In other words, a prepurification treatment was carried out.
The prepurification-treated liquid was loaded into a stirring-type autoclave, and then heated to distill off the excess ethylene glycol at normal pressure, thereby obtaining a melt of concentrated BHET.
The concentrated BHET melt was allowed to cool naturally while being stirred in a nitrogen gas atmosphere, and then taken out from the stirring-type autoclave to obtain a concentrated BHET chip block.
The chip block was heated to 130°C and melted, then this was supplied into a thin film vacuum evaporator using a metering pump, evaporated, and cooled and condensed to obtain purified BHET.
Into a dissolution tank, which had been purged with nitrogen, 2650 kg of this purified BHET was supplied at once, purging with nitrogen was performed again, then the temperature of the dissolution tank was set to 150°C, and dissolution was performed. After dissolution was completed, the temperature of the dissolution tank was raised to 230°C over 30 minutes at the same time while stirrer was performed. To a polycondensation reaction tank, 2650 kg of the obtained BHET solution was transferred, antimony trioxide, cobalt acetate, phosphoric acid, and titanium dioxide were added to the BHET solution at 300 ppm, 170 ppm, 55 ppm, and 0.3% by weight with respect to the amount of PET to be obtained (about 2000 kg of PET is obtained from 2650 kg of BHET), respectively, and the temperature of the polycondensation reaction tank was gradually raised from 230°C to 290°C while stirring was performed at 10 to 40 rpm as well as the pressure was reduced to 40 Pa. Thereafter, when the stirring torque reached a predetermined value, the polycondensation reaction tank was purged with nitrogen, the pressure was returned to normal pressure, the polycondensation reaction was terminated, and the polyester was ejected in the form of strands, cooled, and immediately cut to obtain polyester in the form of chips.

According to such a procedure, chemically recycled polyester, namely, polyester B having an intrinsic viscosity of 0.59 dl/g was obtained.

(Polyester A)

The polyester B (that is, chemically recycled polyester having an intrinsic viscosity of 0.59 dl/g) was continuously supplied into a crystallizer, crystallized at 150°C, then supplied into a dryer, and dried at 130°C for 10 hours. The dried polyester B was sent to a preheater, heated to 180°C, and then supplied into a solid state polymerizer. A solid state polymerization reaction was conducted in nitrogen gas at 190°C for 24 hours to obtain chemically recycled polyester, namely, polyester A having an intrinsic viscosity of 0.79 dl/g.

(Polyester C)

Chemically recycled polyester, namely, polyester C having an intrinsic viscosity of 0.83 dl/g was obtained in the same manner as for the polyester A except that the time for the solid state polymerization reaction was changed from 24 hours to 50 hours.

(Polyester D)

Foreign materials such as the remaining beverages were washed away from the PET bottles for beverages, and then the PET bottles for beverages were crushed to obtain flakes. The flakes were mixed with a 3.5% by mass sodium hydroxide solution and stirring was performed at a flake concentration of 10% by mass under conditions of 85°C and 30 minutes for washing (that is, alkali washing was performed). The flakes taken out after the alkali washing were washed with distilled water by performing stirring at a flake concentration of 10% by weight under conditions of 25°C and 20 minutes. This water washing was repeated two more times using new distilled water each time. The washed flakes were dried and then melted in an extruder, and the melted flakes were allowed to pass through a filter to remove foreign materials. The filters were installed in the extruder up to the third filter so that the opening sizes of the filters successively decreased. The opening size of the third filter was 50 $\mu$m. According to such a procedure, mechanically recycled polyester having an intrinsic viscosity of 0.69 dl/g, namely, polyester D was obtained.

(Polyester E)

As polyester E, that is, fossil fuel-derived polyester, polyester (manufactured by TOYOBO CO., LTD.) having an intrinsic viscosity of 0.62 dl/g and terephthalic acid/ethylene glycol = 100 mol%/100 mol% was used. In other words, homopolyethylene terephthalate (namely, homoPET) having an intrinsic viscosity of 0.62 dl/g was used. It should be noted that both terephthalic acid and ethylene glycol were derived from fossil fuels but not from used polyester products.

(Polyester F)

The temperature of the esterification reactor was raised, and at the time point when the temperature reached 200°C, a slurry containing 86.4 parts by mass of terephthalic acid and 64.4 parts by mass of ethylene glycol was put, and 0.017 part by mass of antimony trioxide and 0.16 part by mass of triethylamine were added as catalysts while stirring was performed. Next, the temperature was raised by heating and the pressurized esterification reaction was conducted under conditions of a gauge pressure of 0.34 MPa and 240°C.

Thereafter, the internal pressure of the esterification reactor was returned to normal pressure, and 0.071 parts by mass of magnesium acetate tetrahydrate and then 0.014 parts by mass of trimethyl phosphate were added. The temperature was raised to 260°C over 15 minutes, and 0.012 parts by mass of trimethyl phosphate and then 0.0036 parts by mass of sodium acetate were added. Fifteen minutes after these were added, 3.0 parts by mass, based on the particle content, of an ethylene glycol slurry of amorphous silica particles having an average particle size of 2.7 $\mu$m was added. The obtained esterification reaction product was transferred to a polycondensation reactor, and a polycondensation reaction was conducted under reduced pressure at 280°C to obtain polyester F having an intrinsic viscosity of 0.61 dl/g.

Here, the ethylene glycol slurry of amorphous silica particles described above is a slurry obtained by mixing amorphous silica particles with ethylene glycol, and performing dispersion treatment using a high-pressure disperser, then centrifugal separation treatment to remove 35% of the coarse particles, and then filtration treatment using a metal filter having an opening of 5 $\mu$m.

It should be noted that both terephthalic acid and ethylene glycol were derived from fossil fuels but not from used polyester products.

(Polyester G)

The temperature of the esterification reactor was raised, and at the time point when the temperature reached 200°C, a slurry containing 86.4 parts by mass of terephthalic acid and 64.4 parts by mass of ethylene glycol was put, and 0.025 part by mass of antimony trioxide and 0.16 part by mass of triethylamine were added as catalysts while stirring was performed. Next, the temperature was raised by heating and the pressurized esterification reaction was conducted under conditions of a gauge pressure of 0.34 MPa and 240°C.

Thereafter, the internal pressure of the esterification reactor was returned to normal pressure, and 0.34 parts by mass of magnesium acetate tetrahydrate and then 0.042 parts by mass of trimethyl phosphate were added. The temperature was raised to 260°C over 15 minutes, and 0.036 parts by mass of trimethyl phosphate and then 0.0036 parts by mass of sodium acetate were added. The obtained esterification reaction product was transferred to a polycondensation reactor, the temperature was gradually raised from 260°C to 280°C under reduced pressure, and then the polycondensation reaction was conducted at 285°C. After the polycondensation reaction was completed, filtration treatment was performed using a sintered stainless steel filter having a pore size of 5 $\mu$m (initial filtration efficiency of 95%) to obtain polyester G having an intrinsic viscosity of 0.62 dl/g. It should be noted that both terephthalic acid and ethylene glycol were derived from fossil fuels but not from used polyester products.

[Table 1]

| | TPA | EG | IPA | Silica | | | Intrinsic viscosity | Mg | P | Melt resitivity | Area proportion of region having molecular weight of 1000 or less |
|---|---|---|---|---|---|---|---|---|---|---|---|
| | | | | Shape | Weight average particle size | Content | | | | | |
| | mol% | mol% | mol% | - | $\mu$m | ppm | dl/g | ppm | ppm | $\times 10^8$ $\Omega \cdot$cm | % |
| Polyester A | 97 | 98 | 3 | - | - | - | 0.79 | 0 | 38 | 6.98 | 1.7 |
| Polyester B | 97 | 98 | 3 | - | - | - | 0.59 | 0 | 35 | 20.2 | 2.5 |
| Polyester C | 97 | 98 | 3 | - | - | - | 0.83 | 0 | 38 | 6.98 | 1.5 |
| Polyester D | 97 | 98 | 3 | - | - | - | 0.69 | 0 | 18 | 3.6 | 3.5 |
| Polyester E | - | - | - | - | - | - | 0.62 | 58 | 31 | 0.22 | 2.5 |
| Polyester F | - | - | - | Amorphous | 2.7 | 30000 | 0.61 | 58 | 31 | 0.22 | 2.5 |
| Polyester G | - | - | - | - | - | - | 0.62 | 983 | 540 | 0.012 | 2.5 |

Supplementary explanation of Table 1 is provided. TPA is an abbreviation for terephthalic acid. EG is an abbreviation for ethylene glycol. IPA is an abbreviation for isophthalic acid.

In the TPA, EG, and IPA columns, "-" means not measured.

Mg indicates the content of a magnesium compound based on magnesium atoms. This content is the mass of the magnesium compound based on magnesium atoms with respect to the mass of the polyester (that is, the mass of magnesium compound based on magnesium atoms/mass of polyester). Here, only the content of the magnesium compound among the alkaline earth metal compounds is presented. This is because the raw material polyester did not contain alkaline earth metal compounds other than a magnesium compound (it could also be said that the content of alkaline earth metal compounds other than a magnesium compound was less than the detection limit).

P indicates the content of a phosphorus compound based on phosphorus atoms. This content is the mass of the phosphorus compound based on phosphorus atoms with respect to the mass of the polyester (that is, the mass of phosphorus compound based on phosphorus atoms/mass of polyester).

As presented in Table 1, among the polyesters A, B and C, the polyester C had the highest intrinsic viscosity and the lowest content of low molecular weight components. The polyester B had the lowest intrinsic viscosity and the highest content of low molecular weight components. In other words, as the intrinsic viscosity was higher, the content of low molecular weight components was lower.

The polyester B (that is, chemically recycled polyester) had a lower intrinsic viscosity than the polyester E (that is, fossil fuel-derived polyester), but had a similar content of low molecular weight components to the polyester E.

Meanwhile, the polyester D (that is, mechanically recycled polyester) had a higher intrinsic viscosity than the polyester E (that is, fossil fuel-derived polyester), but had a higher content of low molecular weight components than the polyester E.

<Example 1>

Three extruders were used to produce a biaxially oriented polyester film constituted of three layers. In order to form the base layer, namely, the B layer of the biaxially oriented polyester film, the polyester A was used at 50.0% by mass, the polyester E at 42.0% by mass, and the polyester G at 8.0% by mass. Meanwhile, in order to form a pair of surface layers, namely, a pair of A layers of the biaxially oriented polyester film, the polyester A was used at 50.0% by mass, the polyester E at 39.0% by mass, the polyester F at 3.0% by mass, and the polyester G at 8.0% by mass. The film formation procedure will be described below.

The raw material polyesters for forming the A layer were dried and then supplied into the first and third extruders and melted at 285°C as well as the raw material polyesters for forming the B layer were dried and then supplied into the second extruder and melted at 285°C. The molten polyesters were guided from the respective extruders to a T-die and laminated in the T-die to form A layers/B layer/A layer (thickness 1 $\mu$m/10 $\mu$m/1 $\mu$m), then extruded from the T-die, and cooled and solidified on a casting drum, namely, a cooling drum having a surface temperature of 25°C. At this time, the film that was extruded from the T-die and but was not yet brought into close contact with the cooling drum was charged using a wire electrode having a diameter of 0.15 mm. The casting speed was 70 m/min. According to such a procedure, an unstretched film was produced.

The unstretched film was heated to 120°C using an infrared heater and stretched in one stage in the longitudinal direction (namely, MD) at a stretching ratio of 4.0 times.

Subsequently, the film was stretched in the width direction (namely, TD) at a preheating temperature of 120°C, a stretching temperature of 130°C, and a stretching ratio of 4.2 times using a tenter-type transverse stretching machine, heat setting was performed at 245°C, and 5% heat relaxation treatment in the width direction was performed. The length of the stretching zone in the width direction was 12.2 m, and the stretching speed in the width direction (namely, TD stretching ratio) was 122.66%/sec. Next, of the pair of A layers, the A layer in contact with the cooling drum was subjected to corona treatment under a condition of 40 W·min/m$^2$, and then the film was wound into a roll using a winder.

According to such a procedure, a master roll (winding length 60,000 m, width 8,000 mm) of a biaxially oriented polyester film having a thickness of 12 $\mu$m was obtained.

The biaxially oriented polyester film was unwound from the master roll, and the slit biaxially oriented polyester film was wound around a core having a diameter of 6 inches (152.2 mm) into a roll while performing slitting at a width of 800 mm and applying surface pressure using a contact roll and tension using a 2-axis turret winder.

According to such a procedure, a biaxially oriented polyester film was obtained.

<Examples 2 to 5 and Comparative Examples 1 to 3>

Biaxially oriented polyester films were produced in the same manner as in Example 1 except that the mixing ratio of the raw material polyesters and the film formation conditions were changed according to the prescription in Table 2. The casting speed was 70 m/min in all these examples. In all these examples, the length of the stretching zone in the width direction was 12.2 m and the stretching speed in the width direction (namely, TD stretching ratio) was 122.66%/sec.

<Example 6>

An unstretched film was obtained in the same manner as in Example 1 except that the mixing ratio of the raw material polyesters was changed according to the prescription in Table 2. The casting speed was 70 m/min.

The ends of the unstretched film were held by clips of a tenter-type simultaneous biaxial stretching machine, and the unstretched film was run through a preheating zone at 120°C and simultaneously biaxially stretched at 130°C by 4.0 times in the longitudinal direction (namely, MD) and 4.2 times in the width direction (namely, TD). Next, the relaxation rate in the width direction was set to 5%, and the film was subjected to heat treatment at a temperature of 245°C, then cooled to room temperature, and wound to obtain a biaxially oriented polyester film having a thickness of 12 μm.

[Table 2]

| | | Example 1 A | Example 1 B | Example 2 A | Example 2 B | Example 3 A | Example 3 B | Example 4 A | Example 4 B | Example 5 A | Example 5 B | Example 6 A | Example 6 B | Comp. Ex. 1 A | Comp. Ex. 1 B | Comp. Ex. 2 A | Comp. Ex. 2 B | Comp. Ex. 3 A | Comp. Ex. 3 B |
|---|---|---|---|---|---|---|---|---|---|---|---|---|---|---|---|---|---|---|---|
| Mixing ratio (% by mass) | Polyester A | 50 | 50 | 20 | 20 | 80 | 80 | 0 | 0 | 0 | 0 | 50 | 50 | 0 | 0 | 0 | 0 | 0 | 0 |
| | Polyester B | 0 | 0 | 0 | 0 | 0 | 0 | 50 | 50 | 80 | 80 | 0 | 0 | 0 | 0 | 0 | 0 | 0 | 0 |
| | Polyester C | 0 | 0 | 0 | 0 | 0 | 0 | 0 | 0 | 0 | 0 | 0 | 0 | 0 | 0 | 0 | 0 | 80 | 80 |
| | Polyester D | 0 | 0 | 0 | 0 | 0 | 0 | 0 | 0 | 0 | 0 | 0 | 0 | 0 | 0 | 50 | 50 | 0 | 0 |
| | Polyester E | 39 | 42 | 69 | 72 | 7 | 10 | 39 | 42 | 9 | 12 | 39 | 42 | 89 | 92 | 39 | 42 | 7 | 10 |
| | Polyester F | 3 | 0 | 3 | 0 | 3 | 0 | 3 | 0 | 3 | 0 | 3 | 0 | 3 | 0 | 3 | 0 | 3 | 0 |
| | Polyester G | 8 | 8 | 8 | 8 | 10 | 10 | 8 | 8 | 8 | 8 | 8 | 8 | 8 | 8 | 8 | 8 | 10 | 10 |
| Silica content (ppm) | | 900 | 0 | 900 | 0 | 900 | 0 | 900 | 0 | 900 | 0 | 900 | 0 | 900 | 0 | 900 | 0 | 900 | 0 |
| Film formation | Thickness of T-die layer (μm) | A/B/A = 1/10/1 | | | | | | | | | | | | | | | | | |
| | Stretching method | Sequential | | Sequential | | Sequential | | Sequential | | Sequential | | Simultaneous | | Sequential | | Sequential | | Sequential | |
| | Chill roller cooling temperature (°C) | 25 | | | | | | | | | | | | | | | | | |
| | Stretching temperature in longitudinal direction (°C) | 120 | | 120 | | 120 | | 120 | | 120 | | – | | 130 | | 130 | | 120 | |
| | Stretching ratio in longitudinal direction (times) | 4.0 | | | | | | | | | | | | | | | | | |
| | Preheating temperature in width direction (°C) | 120 | | 120 | | 120 | | 120 | | 120 | | 120 | | 130 | | 130 | | 120 | |
| | Stretching temperature in width direction (°C) | 130 | | 130 | | 130 | | 130 | | 130 | | 130 | | 140 | | 140 | | 130 | |
| | Stretching ratio in width direction (times) | 4.2 | | | | | | | | | | | | | | | | | |
| | Heat setting temperature (°C) | 245 | | | | | | | | | | | | | | | | | |
| | Thermal relaxation rate in width direction (%) | 5 | | | | | | | | | | | | | | | | | |
| | Film thickness (μm) | 12 | | | | | | | | | | | | | | | | | |
| Evaluation | CRPET content percentage (% by mass) | 50 | | 20 | | 80 | | 50 | | 80 | | 50 | | 0 | | 0 | | 80 | |
| | Intrinsic viscosity of film (dl/g) | 0.60 | | 0.58 | | 0.62 | | 0.52 | | 0.50 | | 0.60 | | 0.56 | | 0.54 | | 0.75 | |
| | IPA content percentage (mol%) | 1.5 | | 0.6 | | 2.4 | | 1.5 | | 2.4 | | 1.5 | | 0.0 | | 1.5 | | 2.4 | |
| | Melting point of film (°C) | 255 | | 256 | | 254 | | 255 | | 253 | | 255 | | 256 | | 253 | | 257 | |
| | Mg (ppm) | 103 | | 120 | | 104 | | 103 | | 86 | | 103 | | 132 | | 103 | | 104 | |
| | P (ppm) | 75 | | 73 | | 88 | | 74 | | 75 | | 75 | | 72 | | 65 | | 57 | |
| | Mg/P | 1.4 | | 1.6 | | 1.2 | | 1.4 | | 1.1 | | 1.4 | | 1.8 | | 1.6 | | 1.8 | |
| | Melt resistivity (× 10^8 Ω·cm) | 0.080 | | 0.080 | | 0.090 | | 0.080 | | 0.092 | | 0.080 | | 0.090 | | 0.090 | | 0.090 | |
| | Area proportion of region having molecular weight of 1000 or less (%) | 4.1 | | 4.5 | | 2.0 | | 5.1 | | 5.4 | | 4.1 | | 4.7 | | 6.2 | | 1.7 | |
| | Tensile strength (MPa) MD | 227 | | 223 | | 227 | | 221 | | 210 | | 270 | | 222 | | 223 | | 230 | |
| | 45° | 269 | | 262 | | 269 | | 256 | | 212 | | 269 | | 218 | | 219 | | 275 | |
| | TD | 312 | | 302 | | 312 | | 291 | | 215 | | 275 | | 216 | | 215 | | 320 | |
| | 135° | 271 | | 263 | | 271 | | 257 | | 213 | | 270 | | 219 | | 230 | | 274 | |
| | Heat shrinkage rate (%) MD | 1.1 | | 1.1 | | 1.1 | | 1.0 | | 0.9 | | 0.5 | | 1.0 | | 1.0 | | 1.3 | |
| | TD | 0.2 | | 0.2 | | 0.2 | | 0.1 | | 0.0 | | 0.5 | | 0.1 | | 0.1 | | 1.2 | |
| | Color b* value, Stacking of 10 sheets | 4.6 | | 5.0 | | 4.6 | | 7.0 | | 7.9 | | 4.6 | | 5.2 | | 8.4 | | 4.3 | |
| | Per 1 μm of thickness | 0.038 | | 0.042 | | 0.038 | | 0.058 | | 0.066 | | 0.038 | | 0.043 | | 0.070 | | 0.036 | |
| | Degree of surface crystallinity, Untreated surface | 1.24 | | 1.26 | | 1.24 | | 1.30 | | 1.32 | | 1.24 | | 1.21 | | 1.21 | | 1.09 | |
| | Treated surface | 1.22 | | 1.24 | | 1.22 | | 1.29 | | 1.30 | | 1.22 | | 1.22 | | 1.22 | | 1.08 | |
| | Puncture strength (N) | 8.6 | | 7.8 | | 8.6 | | 7.0 | | 6.2 | | 8.0 | | 6.1 | | 6.1 | | 8.7 | |
| | (N/μm) | 0.72 | | 0.65 | | 0.72 | | 0.58 | | 0.52 | | 0.67 | | 0.51 | | 0.51 | | 0.73 | |
| | Lamination strength (N/15 mm) MD | 3.9 | | 3.2 | | 4.3 | | 3.9 | | 4.1 | | 3.9 | | 3.0 | | 3.3 | | 4.3 | |
| | TD | 3.9 | | 3.1 | | 4.2 | | 3.9 | | 4.0 | | 3.9 | | 2.9 | | 3.2 | | 4.2 | |
| | Maximum casting speed (m/min) | 70 | | | | | | | | | | | | | | | | | |
| | Film formability | Favorable | | Favorable | | Favorable | | Favorable | | Favorable | | Favorable | | Favorable | | Favorable | | Poor | |

Supplementary explanation of Table 2 is provided. The "mixing ratio" described in Table 2 is presented as a value

# EP 4 563 627 A1

when the total mass of raw material polyesters used to form the target layer is regarded as 100% by mass. For example, with regard to the B layer of Example 1, the mixing ratio indicates that the mass of the polyester A was 50% by mass with respect to 100% by mass of the total mass of the polyesters A, E and G used to form the B layer.

The silica content is the mass of silica with respect to the mass of the target layer (namely, the mass of silica/mass of target layer). The mass of a target layer means the total mass of raw materials (for example, polyesters and particles) for forming the target layer. "CRPET" is a generic name for the polyesters A, B and C.

Mg indicates the content of a magnesium compound based on magnesium atoms. This content is the mass of the magnesium compound based on magnesium atoms with respect to the mass of the biaxially oriented polyester film.

P indicates the content of a phosphorus compound based on phosphorus atoms. This content is the mass of the phosphorus compound based on phosphorus atoms with respect to the mass of the biaxially oriented polyester film.

By replacing 50% by mass of the polyester E (that is, fossil fuel-derived polyester) with the polyester D (that is, mechanically recycled polyester), the content of low molecular weight components became excessively high and the color b* value of the biaxially oriented polyester film also became excessively high (see Comparative Examples 1 and 2).

By replacing 80% by mass of the polyester E (that is, fossil fuel-derived polyester) with the polyester C (that is, chemically recycled polyester having an intrinsic viscosity of 0.83 dl/g), the intrinsic viscosity became excessively high as well as the content of low molecular weight components became excessively low. The film broke during stretching (see Comparative Examples 1 and 3).

Meanwhile, by replacing some (specifically 50% by mass, 20% by mass, and 80% by mass) of the polyester E with the polyester A (that is, chemically recycled polyester having an intrinsic viscosity of 0.79 dl/g), it was possible to produce a biaxially oriented polyester film without breaking and further to suppress the color b* value (see Comparative Example 1 and Examples 1 to 3). By simultaneous biaxial stretching as well, it was possible to produce a biaxially oriented polyester film without breaking (see Example 6).

Meanwhile, by replacing some (specifically 50% by mass and 80% by mass) of the polyester E with the polyester B (that is, chemically recycled polyester having an intrinsic viscosity of 0.59 dl/g) as well, it was possible to produce a biaxially oriented polyester film without breaking and further to suppress the color b* value (see Comparative Example 1 and Examples 4 and 5).

INDUSTRIAL APPLICABILITY

The present invention relates to a biaxially oriented polyester film, and therefore the present invention has industrial applicability.

DESCRIPTION OF REFERENCE SIGNS

8 Biaxially oriented polyester film
81 First layer
82 Second layer
83 Third layer
9 Laminated body
11 Printed Layer
21 Sealant Layer
22 Sealant Layer
31 Inorganic thin film layer
32 Anchor coat layer
33 Protective layer
51 Base layer
61 Intermediate layer

**Claims**

1. A biaxially oriented polyester film comprising chemically recycled polyester,
   wherein an area proportion of a region having a molecular weight of 1000 or less is 1.9% or more and 5.5% or less of a total peak area in a molecular weight distribution curve acquired by gel permeation chromatography.

2. The biaxially oriented polyester film according to claim 1, wherein a color b* value per 1 $\mu$m of thickness is 0.067 or less.

41

3. The biaxially oriented polyester film according to claim 1, wherein a content of the chemically recycled polyester is 20% by mass or more.

4. A laminated body comprising:

   the biaxially oriented polyester film according to claim 1; and
   a sealant layer.

5. The laminated body according to claim 4, further comprising a printed layer,
   wherein the printed layer, the biaxially oriented polyester film, and the sealant layer are arranged in this order in a thickness direction of the laminated body at least at a part of the laminated body.

6. The laminated body according to claim 4, further comprising a printed layer,
   wherein the biaxially oriented polyester film, the printed layer, and the sealant layer are arranged in this order in a thickness direction of the laminated body at least at a part of the laminated body.

7. A laminated body comprising:

   the biaxially oriented polyester film according to claim 1; and
   a pressure sensitive adhesive layer.

8. The laminated body according to claim 7, further comprising a printed layer,
   wherein the printed layer, the biaxially oriented polyester film, and the pressure sensitive adhesive layer are arranged in this order in a thickness direction of the laminated body at least at a part of the laminated body.

9. The laminated body according to claim 7, further comprising a printed layer,
   wherein the biaxially oriented polyester film, the printed layer, and the pressure sensitive adhesive layer are arranged in this order in a thickness direction of the laminated body at least at a part of the laminated body.

10. Apackaging container comprising the laminated body according to any one of claims 4 to 9.

Fig.1

8
81
82
83

Fig.2

9
8
21

EP 4 563 627 A1

Fig.3

Fig.4A

Fig.4B

Fig.5A

Fig.5B

Fig.6A

Fig.6B

9

8
32
31
33
21

Fig.7

9

22
8
21

Fig.8

9

8
11
21

Fig.9

9

8
11
31
21

Fig.10

Fig.11

Fig.12

9

22
8
11
21

Fig.13

9

51
21

Fig.14

Fig.15A

Fig.15B

9

51
61
21

Fig.16

9

51
11
21

Fig.17A

Fig.17B

# INTERNATIONAL SEARCH REPORT

International application No.

**PCT/JP2023/002858**

| A. | CLASSIFICATION OF SUBJECT MATTER |
|---|---|

*C08J 5/18*(2006.01)i; *B29B 17/00*(2006.01)i; *B32B 27/36*(2006.01)i; *B65D 65/40*(2006.01)i
FI:   C08J5/18 CFD; B29B17/00; B32B27/36; B65D65/40 D

According to International Patent Classification (IPC) or to both national classification and IPC

| B. | FIELDS SEARCHED |
|---|---|

Minimum documentation searched (classification system followed by classification symbols)

B32B1/00-43/00; C08J5/18; B29B17/00; B65D65/40

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022/049998 A1 (TOYOBO CO., LTD.) 10 March 2022 (2022-03-10)<br>claims 1-2, paragraphs [0004], [0102]-[0111], [0115], [0123]-[0124], [0136]-[0137], table 2B, examples 9, 10 | 1-3 |
| Y | | 2, 4-10 |
| Y | JP 2014-065282 A (TOYOBO CO., LTD.) 17 April 2014 (2014-04-17)<br>claim 1, paragraphs [0071], [0125] | 2 |
| Y | JP 6984718 B1 (DAINIPPON PRINTING CO LTD) 22 December 2021 (2021-12-22)<br>claims, paragraph [0057] | 4-10 |
| A | JP 2006-241349 A (TOYO BOSEKI) 14 September 2006 (2006-09-14)<br>claim 1, paragraphs [0001], [0086], [0091], [0127], [0136], examples | 1-10 |
| A | JP 8-198959 A (TOYO BOSEKI) 06 August 1996 (1996-08-06)<br>claim 1, paragraphs [0001]-[0006], [0041], examples | 1-10 |
| A | JP 2000-103023 A (MITSUBISHI POLYESTER FILM COPP) 11 April 2000 (2000-04-11)<br>claim 1, paragraphs [0002], [0014], examples | 1-10 |

☐ Further documents are listed in the continuation of Box C.    ☑ See patent family annex.

| * | Special categories of cited documents: | |
|---|---|---|
| "A" | document defining the general state of the art which is not considered to be of particular relevance | "T" | later document published after the international filing date or priority date and not in conflict with the application but cited to understand the principle or theory underlying the invention |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 February 2023** | **07 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/002858**

| Patent document cited in search report | | | Publication date (day/month/year) | Patent family member(s) | | | Publication date (day/month/year) |
|---|---|---|---|---|---|---|---|
| WO | 2022/049998 | A1 | 10 March 2022 | TW | 202220824 | A | |
| JP | 2014-065282 | A | 17 April 2014 | (Family: none) | | | |
| JP | 6984718 | B1 | 22 December 2021 | EP | 4063116 | A1 | |
| | | | | claims, paragraphs [0144]-[0151] | | | |
| JP | 2006-241349 | A | 14 September 2006 | (Family: none) | | | |
| JP | 8-198959 | A | 06 August 1996 | (Family: none) | | | |
| JP | 2000-103023 | A | 11 April 2000 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6036099 B
- JP 6984717 B
- JP 2000169623 A
- JP 2000302707 A